# EUROPEAN PATENT APPLICATION

(11) **EP 4 578 790 A1**
(43) Date of publication of application: **02.07.2025**
(21) Application number: 22956030.5
(22) Date of filing: 24.08.2022
(51) Int. Cl.: B64D 47/08, F16M 11/00

(54) **GIMBAL, GIMBAL CAMERA AND UNMANNED AERIAL VEHICLE**

(71) Applicant: SZ DJI Technology Co., Ltd., Shenzhen, Guangdong 518057 (CN)
(72) Inventor: TIAN, He, Shenzhen, Guangdong 518057 (CN); YU, Shichao, Shenzhen, Guangdong 518057 (CN); GUO, Shanguang, Shenzhen, Guangdong 518057 (CN); BIN, Peng, Shenzhen, Guangdong 518057 (CN)
(74) Representative: Goddar, Heinz J.
(86) International application number: PCT/CN2022/114621
(87) International publication number: WO 2024/040482

(57) **Abstract**

A gimbal, a gimbal camera, and an unmanned aerial vehicle are provided. The gimbal includes: a first driver mechanism, used for driving a photographing device to rotate around a first rotation axis; a base, where the base is connected to the first driver mechanism; a second driver mechanism, connected to the base; and an arc-shaped shaft arm. The arc-shaped shaft arm has a first accommodation space on one side close to its axis, the first accommodation space is used to accommodate the photographing device, an optical axis of the photographing device is arranged non-parallel to the axis of the arc-shaped shaft arm, the second driver mechanism is connected to the arc-shaped shaft arm, and the second driver mechanism drives the photographing device to slide relatively along the arc-shaped shaft arm and rotate relative to the second rotation axis. The gimbal provided by the present disclosure may avoid blocking the photographing device, which is beneficial to increasing the field of view of the photographing device and improving the flexibility and applicability of the gimbal.

## Description

### TECHNICAL FIELD

The present disclosure generally relates to the field of unmanned aerial vehicles, and, more particularly, to a gimbal, a gimbal camera, and an unmanned aerial vehicle.

### BACKGROUND

As users pursue ultimate user experience, the users have higher and higher requirements for the image quality and photographing experience of photographing devices. To obtain a better photographing effect, a gimbal is usually used to carry a photographing device. As a device for stabilizing the photographing device, the gimbal can compensate for position/angle changes of the photographing device through one or more rotation/linear motion axes, to achieve stable photographing and improve the image quality. Usually, the gimbal is provided with at least two rotation axes, and the at least two rotation axes are driven to rotate in linkage through a driving member to offset the influence of the body disturbance on the photographing device during the flight of the unmanned aerial vehicle, and enable the photographing device to obtain a larger visual range.

In existing technology, at least two motors with intersecting axes are usually used to drive the photographing device to rotate around the at least two rotation axes. To realize the linkage between the rotation axes, different rotation axes are usually connected by connectors. Since the photographing device is usually located at the intersection of each rotation axis, some viewing angles of the photographing device will be blocked by the motors and the connectors, resulting in a smaller viewing angle of the photographing device, which limits the flexibility and applicability of the gimbal. Further, since the shafts of the multiple motors need to be connected in series using connectors, the cantilever is long and the structure is complex, which reduces the overall modal frequency and static stiffness of the gimbal. The precise control of the gimbal and the capture of high-quality images are compromised.

### SUMMARY

To solve the problem in the related art that the gimbal easily blocks the photographing device and has low flexibility, the embodiments of the present disclosure provide a gimbal, a gimbal camera, and an unmanned aerial vehicle.

In a first aspect, the present disclosure provides a gimbal for connecting a photographing device. The gimbal includes:
a first driver mechanism, used for driving the photographing device to rotate around a first rotation axis;
a base, where the base is connected to the first driver mechanism;
a second driver mechanism, connected to the base; and
an arc-shaped shaft arm. The arc-shaped shaft arm has a first accommodation space on one side close to its axis, the first accommodation space is used to accommodate the photographing device, an optical axis of the photographing device is arranged non-parallel to the axis of the arc-shaped shaft arm, the second driver mechanism is connected to the arc-shaped shaft arm, and the second driver mechanism drives the photographing device to slide relatively along the arc-shaped shaft arm and rotate relative to the second rotation axis.

In a second aspect, the present disclosure provides a gimbal for connecting a photographing device. The gimbal includes:
a first driver mechanism, used for driving the photographing device to rotate around a first rotation axis;
a base, where the base is connected to the first driver mechanism;
a second driver mechanism, connected to the base;
an arc-shaped shaft arm, where: the arc-shaped shaft arm has a first accommodation space on one side close to its axis, the first accommodation space is used to accommodate the photographing device, an optical axis of the photographing device is arranged non-parallel to the axis of the arc-shaped shaft arm, the second driver mechanism is connected to the arc-shaped shaft arm, and the second driver mechanism drives the photographing device to slide relatively along the arc-shaped shaft arm and rotate relative to the second rotation axis; and
a third driver mechanism connected to the arc-shaped shaft arm, where: the third driver mechanism is arranged near the first accommodation space, and the third driver mechanism is used to drive the photographing device to rotate around a third rotation axis in the first accommodation space.

In a third aspect, the present disclosure provides a gimbal camera. The gimbal camera includes a camera and a gimbal according to previous aspects. The camera is connected to the gimbal.

In a fourth aspect, the present disclosure provides an unmanned aerial vehicle. The unmanned aerial vehicle includes a body and a gimbal camera. The gimbal camera is connected to the body.

In the gimbal provided by various embodiments of the present disclosure, the first driver mechanism and the second driver mechanism may be connected in series through the base and the arc-shaped shaft arm, to realize the linkage rotation of the gimbal around the first rotation axis and the second rotation axis. The structure may be simple, the gimbal volume may be small, the cantilever length may be short, the modal frequency and static stiffness of the gimbal may be large, which may be conducive to the precise control of the gimbal and the photographing of high-quality images. Also, since the arc-shaped shaft arm has a first accommodation space on the side close to its axis, the accommodation space may be used to accommodate the photographing device, the optical axis of the photographing device may be non-parallel to the axis of the arc-shaped shaft arm, and the arc-shaped shaft arm may rotate around the second rotation axis under the drive of the second driver mechanism. Therefore, the arc-shaped shaft arm and the second driver mechanism may avoid the second rotation axis design, and prevent the second driver mechanism and the arc-shaped shaft arm from blocking the photographing device, which may be conducive to increasing the field of view of the photographing device and improving the flexibility and applicability of the gimbal.

The above description is only an overview of the technical solution of the present disclosure. In order to more clearly understand the technical means of the present disclosure, it can be implemented in accordance with the contents of the specification. In order to make the above and other purposes, features, and advantages of the present disclosure more obvious and easier to understand, the implementation methods of the present disclosure are listed below.

### BRIEF DESCRIPTION OF THE DRAWINGS

To more clearly illustrate the technical solutions of the embodiments of the present disclosure or related art, the drawings needed for use in the description of the embodiments or related art will be briefly introduced below. Obviously, the drawings described below are some embodiments of the present disclosure. For those ordinary in the art, other drawings can be obtained based on these drawings without any creative work.
FIG. 1 is a schematic structural diagram of a gimbal consistent with embodiments of the present disclosure.
FIG. 2 is a cross-sectional structural view of the gimbal shown in FIG. 1.
FIG. 3 is a schematic exploded structural view of the gimbal shown in FIG. 1.
FIG. 4 is a schematic longitudinal cross-sectional structural diagram showing the connection between an arc-shaped shaft arm and a base of the gimbal shown in FIG. 1.
FIG. 5 is a schematic exploded structural view of a rolling assembly shown in FIG. 4.
FIG. 6 is a schematic exploded structural view of a pre-tightening assembly in the structure shown in FIG. 4.
FIG. 7 is a schematic structural diagram of the arc-shaped arm, the rolling assembly, and the pre-tightening assembly shown in FIG. 4.
FIG. 8 is a schematic structural diagram of another rolling assembly consistent with the present disclosure.
FIG. 9 is a schematic longitudinal cross-sectional structural view of the rolling assembly shown in FIG. 8.
FIG. 10 is a schematic exploded structural view of the rolling assembly shown in FIG. 8.
FIG. 11 is another schematic structural diagram of an arc-shaped arm, a rolling assembly, and a pre-tightening assembly consistent with embodiments of the present disclosure.
FIG. 12 is a schematic longitudinal cross-sectional structural view of the structure shown in FIG. 11.
FIG. 13 is a schematic exploded structural view the structure shown in FIG. 11.
FIG. 14 is a schematic structural diagram of a first arc slider and a second arc slider consistent with the present disclosure.
FIG. 15 is another schematic structural diagram of an arc-shaped arm, a rolling assembly, and a pre-tightening assembly consistent with embodiments of the present disclosure.
FIG. 16 is a schematic longitudinal cross-sectional structural view of the structure shown in FIG. 15.
FIG. 17 is a schematic exploded structural view of the structure shown in FIG. 15.
FIG. 18 is a schematic structural diagram of a second driver mechanism consistent with embodiments of the present disclosure.
FIG. 19 is a schematic side view of the second driver mechanism shown in FIG. 18.
FIG. 20 is another schematic side view of a second driver mechanism in FIG. 18 consistent with the present disclosure.
FIG. 21 is a schematic structural diagram of another gimbal consistent with embodiments of the present disclosure.
FIG. 22 is another schematic structural diagram of the other gimbal consistent with embodiments of the present disclosure.
FIG. 23 is a schematic structural diagram of a further gimbal consistent with embodiments of the present disclosure.
FIG. 24 is a schematic structural diagram of an even further gimbal consistent with embodiments of the present disclosure.
FIG. 25 is a schematic structural diagram of an unmanned aerial vehicle consistent with embodiments of the present disclosure.

### Reference numerals:

10-first driver mechanism, 11-base, 111-wedge-shaped roll groove, 12-arc-shaped shaft arm, 121-step-shaped roll groove, 13-second driver mechanism, 131-coil assembly, 132-magnetic assembly, 133-positioning pin, 134-positioning sleeve, 135-yoke, 136-motor, 137-first transmission rope, 138-second transmission rope, 139-first welding point, 1310-second welding point, 14-third driver mechanism, 15-rolling assembly, 151-middle shaft, 152-roller, 1521-first roller, 1522-second roller, 153-first bearing, 154-second bearing, 155-first gasket, 156-pre-tightening nut, 157-second retaining frame, 1571-ball mounting hole, 158-ball, 1581-first ball, 1582-second ball, 16-pre-tightening assembly, 161-pre-tightening pin, 1 62-third bearing, 163-fourth bearing, 164-pre-tightening limit sleeve, 165-second gasket, 166-third gasket, 167-bearing bracket, 168-cover plate, 169-pre-tightening member, 1610-first push member, 1611-second push member, 1612-first pin shaft, 1613-second pin shaft, 1614-fifth bearing, 1615-sixth bearing, 1616-guide sleeve, 1617-first elastic member, 16 18-first arc slider, 1619-second arc slider, 1620-first friction plate, 1621-second friction plate, 1622-first limit plate, 1623-second limit plate, 1624-pre-tightening pad, 1625-first coil assembly, 1626-first magnetic assembly, 1627-bearing pin, 1628-carrier bearing, 1629-fixed pin, 1630-fixed bearing, 1631-floating pin, 1632-floating bearing, 1633-second elastic member, 1634-fixation pressing plate, 1635-first yoke, 17-connector, 18-shock-absorption bracket, 19-shock-absorption ball, 110-extension arm, 112-position detection assembly, 113-auxiliary magnet, 114-magnet cover, 115-control line, 116-wire ring, 20-photographing device, 300-body, 400-gimbal camera, A-axis of the arc-shaped shaft arm, B-optical axis of the photographing device.

### DETAILED DESCRIPTION OF THE EMBODIMENTS

To make the purpose, technical solution, and advantages of the embodiments of the present disclosure clearer, the technical solution in the embodiments of the present disclosure will be clearly and completely described below in conjunction with the drawings in the embodiments of the present disclosure. Obviously, the described embodiments are part of the embodiments of the present application, not all of the embodiments. Based on the embodiments in the present disclosure, all other embodiments obtained by those skilled in the art without creative work are within the protection scope of the present disclosure.

The terms "first" or "second" in the specification and claims of the present disclosure may include one or more of the features explicitly or implicitly. In the description of the present disclosure, unless otherwise specified, the meaning of "multiple" is two or more. In addition, "and/or" in the specification and claims represents at least one of the connected objects, and the character "/" generally indicates that the front and back associated objects are in an "or" relationship.

In the description of the present disclosure, it should be understood that the terms "center," "longitudinal," "lateral," "length," "width," "thickness," "up," "down," "front," "back," "left," "right," "vertical," "horizontal," "top," "bottom," "inside," "outside," "clockwise," "counterclockwise," "axial," "radial," "circumferential" and the like indicate the orientation or position relationship based on the orientation or position relationship shown in the drawings, which is only for the convenience of describing the present disclosure and simplifying the description, rather than indicating or implying that the device or element referred to must have a specific orientation, be constructed and operated in a specific orientation, and therefore cannot be understood as a limitation to the present disclosure.

In the description of the present disclosure, it should be noted that, unless otherwise clearly specified and limited, the terms "installed" or "connected" should be understood in a broad sense. For example, it can be a fixed connection, a detachable connection, or an integral connection; it can be a mechanical connection or an electrical connection; it can be a direct connection, or it can be indirectly connected through an intermediate medium, or it can be the internal communication of two components. For ordinary technicians in this field, the specific meanings of the above terms in the present disclosure can be understood according to specific circumstances.

The present disclosure provides a gimbal. The gimbal may be used to connect a photographing device, and the photographing device may include but is not limited to any one of a camera, a terminal device, a video camera, or a light. The gimbal may be used to install and support the photographing device, and control the rotation or movement of the photographing device, to achieve the adjustment of the viewing angle of the photographing device and enrich the function and photographing experience of the photographing device. In the present disclosure, the photographing device as a camera will be used as an example for illustration, and other types of photographing devices may be implemented by reference in other embodiments.

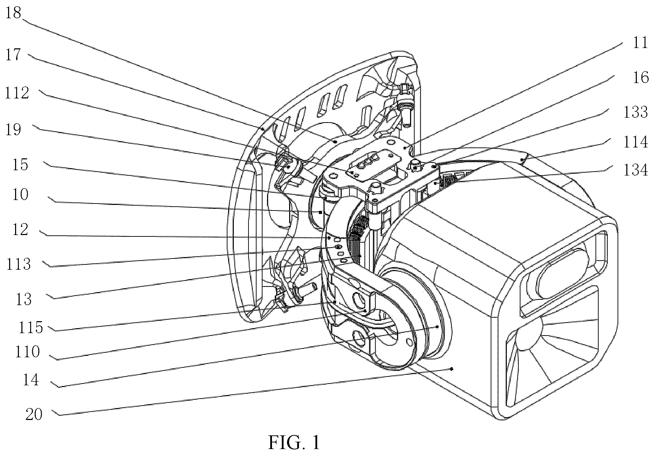

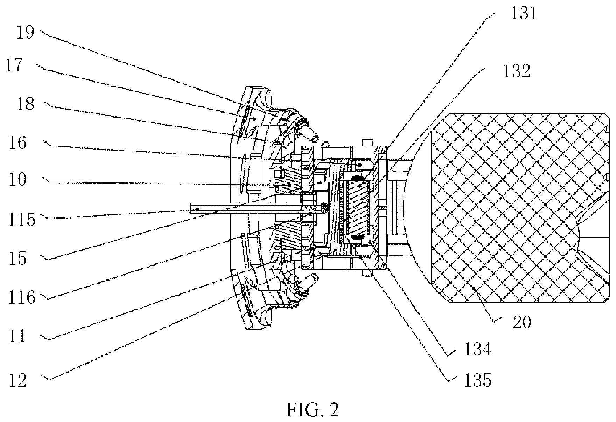

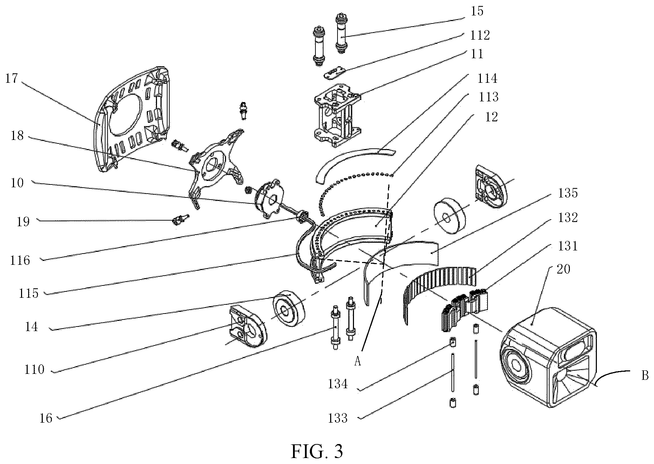

FIG. 1 is a schematic structural diagram of a gimbal consistent with embodiments of the present disclosure. FIG. 2 is a cross-sectional structural view of the gimbal shown in FIG. 1. FIG. 3 is a schematic exploded structural view of the gimbal shown in FIG. 1.

In one embodiment, the gimbal includes: a first driver mechanism 10 used to drive the photographing device 20 to rotate around a first rotation axis; a base 11 connected to the first driver mechanism 10; a second driver mechanism 13 connected to the base 11; an arc-shaped shaft arm 12 including a first accommodation space on one side close to its axis. The first accommodation space may be used to accommodate the photographing device 20, and the optical axis of the photographing device 20 may be non-parallel to the axis of the arc-shaped shaft arm 12. The second driver mechanism 13 may be coupled to the arc-shaped shaft arm 12, and the second driver mechanism 13 may drive the arc-shaped shaft arm 12 to rotate around the second rotation axis.

In the gimbal provided by embodiments of the present disclosure, the first driver mechanism 10 and the second driver mechanism 13 may be connected in series through the base 11 and the arc-shaped shaft arm 12, to realize the linkage rotation of the gimbal around the first rotation axis and the second rotation axis. The gimbal may have a simple structure, a small gimbal volume, a short cantilever length, a large modal frequency, and a large static stiffness, which may be conducive to the precise control of the gimbal and the photographing of high-quality images. Further, since the arc-shaped shaft arm 12 includes the first accommodation space on the side close to its axis, the accommodation space may be used to accommodate the photographing device 20, and the optical axis of the photographing device 20 may be non-parallel to the axis of the arc-shaped shaft arm 12. The arc-shaped shaft arm 12 may rotate around the second rotation axis under the drive of the second driver mechanism 13, such that the arc-shaped shaft arm 12 and the second driver mechanism 13 may be designed to avoid the second rotation axis, to prevent the second driver mechanism 13 and the arc-shaped shaft arm 12 from blocking the photographing device 20. The angle of the field of view of the photographing device 20 may be increased and the flexibility and applicability of the gimbal may be improved.

In one embodiment, the first driver mechanism 10 or the second driver mechanism 13 may include but are not limited to at least one of driver members such as a motor or an electric motor. The specific types of the first driver mechanism 10 and the second driver mechanism 13 are not limited in the embodiments of the present disclosure. An output end of the first driver mechanism 10 may be connected to the base 11 to drive the base 11 to rotate around the first rotation axis, such that the rotation of the base 11 around the first rotation axis drives the photographing device 20 to rotate around the first rotation axis, to adjust the viewing angle. The second driver mechanism 13 may be connected to the base 11, and an output end of the second driver mechanism 13 may be connected to the arc-shaped shaft arm 12 to drive the arc-shaped shaft arm 12 to rotate around the second rotation axis, such that the rotation of the arc-shaped shaft arm 12 around the second rotation axis drives the photographing device 20 to rotate around the second rotation axis, to adjust the viewing angle.

In one embodiment, the base 11 may be used as a bracket for the rotation of the arc-shaped shaft arm 12, providing a stable and accurate installation reference. The base 11 may also be used as a transition piece for the first rotation axis and the second rotation axis. The base 11 and the first driver mechanism 10 may be connected by fasteners such as screws and bolts.

In one embodiment of the present disclosure, the first rotation axis and the second rotation axis may be substantially perpendicular to each other. Therefore, through the rotation of the photographing device 30 around the first rotation axis and the rotation of the arc-shaped shaft arm 12 around the second rotation axis, the photographing device 20 may be rotated around two rotation axes whose directions are substantially perpendicular to each other, to increase the adjustment range of the viewing angle of the photographing device 20.

For example, the first rotation axis may be one of the roll axis, the pitch axis, and the yaw axis, and the second rotation axis may be another of the roll axis, the pitch axis, and the yaw axis. The specific content of the first rotation axis and the second rotation axis is not limited in the embodiments of the present disclosure.

In one embodiment of the present disclosure, the arc-shaped shaft arm 12 may be a hollow arc-shaped structure with the first accommodation space on one side, and the photographing device 20 may be arranged in the first accommodation space and connected to the arc-shaped shaft arm 12. Therefore, when the arc-shaped shaft arm 12 rotates around the second rotation axis, the photographing device 20 may rotate around the second rotation axis following the arc-shaped shaft arm 12.

Optionally, the shape of the arc-shaped shaft arm 12 may be at least one of a circular arc or an elliptical arc, and the specific shape of the arc-shaped shaft arm 12 is not limited in the embodiments of the present disclosure.

Optionally, the second rotation axis may be substantially coincident with the axis of the arc-shaped shaft arm 12, such that the rotation around the second rotation axis may be realized in the process of the arc-shaped shaft arm 12 rotating around its axis. Since the arc-shaped shaft arm 12 is able to rotate around its axis with good rotation accuracy, when the second rotation axis substantially coincide with the axis of the arc-shaped shaft arm 12, the rotation of the arc-shaped shaft arm 12 around the second rotation axis may have a correspondingly high rotation accuracy, thereby improving the accuracy of the rotation control of the photographing device 20 by the gimbal.

For example, in one embodiment, the substantial coincidence of the second rotation axis with the axis of the arc-shaped shaft arm 12 may include: the angle between the second rotation axis and the axis of the arc-shaped shaft arm 12 is less than a first threshold value, where the first threshold value may be less than or equal to 1 degree, 1.5 degrees or 2.2 degrees, etc. The specific value of the first threshold value is not limited in the embodiments of the present disclosure.

In one embodiment of the present disclosure, the intersection of the first rotation axis and the second rotation axis may be located in the first accommodation space. Since the photographing device 20 is located in the first accommodation space, when the intersection of the first rotation axis and the second rotation axis is located in the first accommodation space, the stability of the photographing device 20 rotating around the first rotation axis and the second rotation axis may be improved, therefore improving the photographing stability of the photographing device 20.

As shown in FIG. 1, FIG. 2 and FIG. 3, in another embodiment, the gimbal includes: a first driver mechanism 10 used to drive the photographing device 20 to rotate around a first rotation axis; a base 11 connected to the first driver mechanism 10; a second driver mechanism 13 connected to the base 11; an arc-shaped shaft arm 12 including a first accommodation space on one side close to its axis, where the first accommodation space is used to accommodate the photographing device 20 and the optical axis of the photographing device 20 is arranged non-parallel to the axis of the arc-shaped shaft arm 12; and a third driver mechanism 14 connected to the arc-shaped shaft arm 12. The second driver mechanism 13 may be connected to the arc-shaped shaft arm 12. The second driver mechanism 13 may drive the arc-shaped shaft arm 12 to rotate around the second rotation axis. The third driver mechanism 14 may be arranged close to the first accommodation space, and the third driver mechanism 14 may be used to drive the photographing device 20 to rotate around a third rotation axis in the first accommodation space.

In the gimbal provided by embodiments of the present disclosure, the first driver mechanism 10, the second driver mechanism 13 and the third driver mechanism 14 may be connected in series through the base 11 and the arc-shaped shaft arm 12, to realize the linkage rotation of the gimbal around the first rotation axis, the second rotation axis and the third rotation axis. The gimbal may have a simple structure, a small gimbal volume, a short cantilever length, a large modal frequency, and a large static stiffness, which may be conducive to the precise control of the gimbal and the photographing of high-quality images. Further, since the arc-shaped shaft arm 12 includes the first accommodation space on the side close to its axis, the accommodation space may be used to accommodate the photographing device 20, and the optical axis of the photographing device 20 may be arranged non-parallel to the axis of the arc-shaped shaft arm 12. The arc-shaped shaft arm 12 may rotate around the second rotation axis under the drive of the second driver mechanism 13, such that the arc-shaped shaft arm 12 and the second driver mechanism 13 may be designed to avoid the second rotation axis, to prevent the second driver mechanism 13 and the arc-shaped shaft arm 12 from blocking the photographing device 20. The angle of the field of view of the photographing device 20 may be increased and the flexibility and applicability of the gimbal may be improved. Also, the photographing device 20 may rotate around the third rotation axis under the drive of the third driver mechanism 14. Therefore, the gimbal may compensate for the position/angle changes of the photographing device 20 through the three rotation axes, further improving the photographing stability and photographing quality of the photographing device 20.

In one embodiment of the present disclosure, any two of the first rotation axis, the second rotation axis, and the third rotation axis may be substantially orthogonal to each other. Therefore, by the rotation of the photographing device 20 around the first rotation axis, the rotation of the arc-shaped shaft arm 12 around the second rotation axis, and the rotation of the photographing device 20 around the third rotation axis, the photographing device 20 may be able to rotate around three two orthogonal rotation axes to achieve full-range adjustment of the viewing angle. Therefore, the photographing range of the camera 20 can be further increased, and the shooting experience of the camera 20 can be improved.

For example, the first rotation axis may be one of the roll axis, the pitch axis, and the yaw axis; the second rotation axis may be another one of the roll axis, the pitch axis, and the yaw axis; and the third rotation axis may be yet another one of the roll axis, the pitch axis, and the yaw axis. The specific content of the first rotation axis, the second rotation axis, and the third rotation axis is not limited in the embodiments of the present disclosure.

In one embodiment of the present disclosure, the intersection of the first rotation axis, the second rotation axis, and the third rotation axis may be located in the first accommodation space. Since the photographing device 20 is located in the first accommodation space, when the intersection of the first rotation axis, the second rotation axis, and the third rotation axis is located in the first accommodation space, the stability of the photographing device 20 rotating around the first rotation axis, the second rotation axis and the third rotation axis may be improved, thereby improving the photographing stability of the photographing device 20.

As shown in FIG. 3, the optical axis B of the photographing device 20 may not be parallel to the axis A of the arc-shaped shaft arm 12. In one embodiment of the present disclosure, the angle between the optical axis B of the photographing device 20 and the axis A of the arc-shaped shaft arm 12 may be adjustable to prevent the arc-shaped shaft arm 12 from blocking the photographing angle of the photographing device 20. For example, the adjustment of the angle between the optical axis B of the photographing device 20 and the axis A of the arc-shaped shaft arm 12 may be achieved by driving the photographing device 20 to rotate around the first rotation axis through the first driver mechanism 10, and/or driving the arc-shaped shaft arm 12 to rotate around the second rotation axis through the second driver mechanism 13, and/or driving the arc-shaped shaft arm 12 to rotate around the third rotation axis through the third driver mechanism 14.

Optionally, the angle between the optical axis B of the photographing device 20 and the axis A of the arc-shaped shaft arm 12 may be between 0 degrees and 180 degrees. In actual applications, according to the needs of the photographing scene, the angle between the optical axis B of the photographing device 20 and the axis A of the arc-shaped shaft arm 12 may be adjusted between 0 degrees and 180 degrees to obtain a better photographing effect. At the same time, the arc-shaped shaft arm 12 may be prevented from blocking the photographing angle of the photographing device 20.

In some optional embodiments of the present disclosure, the photographing device 20 may be connected to the first driver mechanism 10, and the first driver mechanism 10 may directly drive the photographing device 20 to rotate around the first rotation axis to adjust the angle between the optical axis B of the photographing device 20 and the axis of the arc-shaped shaft arm 12.

In some other optional embodiments of the present disclosure, the photographing device 20 may be connected to the third driver mechanism 14, and the third driver mechanism 14 may drive the photographing device 20 to rotate around the third rotation axis, such that the angle between the optical axis B of the photographing device 20 and the axis A of the arc-shaped shaft arm 12 is adjustable.

Optionally, the extension direction of the optical axis B of the photographing device 20 may be perpendicular to the extension direction of the axis A of the arc-shaped shaft arm 12, such that the arc-shaped shaft arm 12 blocks the photographing device 20 to the minimum and the photographing angle of the photographing device 20 reaches the maximum.

Optionally, the photographing device 20 may be connected to the first driver mechanism 10, and, when the photographing device 20 slides along the arc-shaped shaft arm 12, the photographing device 20 may remain facing the axis of the arc-shaped shaft arm 20. Therefore, during the sliding of the photographing device 20 along the arc-shaped shaft arm 12, the arc-shaped shaft arm 20 may be always kept from blocking the photographing angle of the photographing device 20, such that the photographing device may achieve a larger photographing angle.

In some optional embodiments of the present disclosure, the arc-shaped shaft arm 12 may be connected to the base 11, and the second driver mechanism 13 may drive the arc-shaped shaft arm 12 to rotate around the second rotation axis on the base 11. The base 11 may be used to limit the rotation of the arc-shaped shaft arm 12 to improve the rotation accuracy of the arc-shaped shaft arm 12 around the second rotation axis, thereby improving the accuracy of the gimbal adjusting the rotation of the photographing device 20 around the second rotation axis, which is conducive to the photographing device 20 to obtain a better photographing effect.

Optionally, the gimbal may also include: a rolling assembly 15, which is connected between the arc-shaped shaft arm 12 and the base 11 such that the arc-shaped shaft arm 12 is able to rotate on the base 11. The rolling assembly 15 may be used to assist the arc-shaped shaft arm 12 in realizing rotation on the base 11, thereby improving the rotation smoothness of the arc-shaped shaft arm 12.

Optionally, the gimbal may further include a pre-tightening assembly 16, which is connected to the arc-shaped shaft arm 12 and the base 11 to provide a pre-tightening force to tighten the arc-shaped shaft arm 12 relative to the base 11. Therefore, during the rotation of the arc-shaped shaft arm 12 around the second rotation axis on the base 11, under the action of the pre-tightening force of the pre-tightening assembly 16, the arc-shaped shaft arm 12 may be tightened relative to the base 11 and may be better attached to the base 11. Under the limit action of the base 11, the arc-shaped shaft arm 12 may achieve a higher rotation accuracy, which is conducive to the photographing device 20 to obtain a better photographing effect.

In one embodiment of the present disclosure, an avoidance space may be set in the base 11, and the arc-shaped shaft arm 12 may be inserted in the avoidance space and may rotate around the second rotation axis in the avoidance space. The rolling assembly 15 and the pre-tightening assembly 16 may be at least partially located in the avoidance space. The rolling assembly 15 may assist the rotation of the arc-shaped shaft arm 12 in the avoidance space of the base 11, thereby improving the smoothness of the rotation of the arc-shaped shaft arm 12. The pre-tightening assembly 16 may provide the arc-shaped shaft arm 12 with a pre-tightening force to tighten the arc-shaped shaft arm 12 with respect to the avoidance space of the base 11, such that the arc-shaped shaft arm 12 may achieve a higher rotation accuracy in the avoidance space.

For example, the arc-shaped shaft arm 12 may include a first side close to its axis and a second side away from its axis, and the rolling assembly 15 may be connected between the base 11 and the second side, such that the second side of the arc-shaped shaft arm 12 is able to rotate along the base 11. The pre-tightening assembly 16 may be connected between the base 11 and the first side to pre-tighten from the first side of the arc-shaped shaft arm 12, such that the arc-shaped shaft arm 12 is tightened relative to the base 11.

In practical applications, the first side may be used as the inner side of the arc-shaped shaft arm 12, and the second side may be used as the outer side of the arc-shaped shaft arm 12. By connecting the rolling assembly 15 between the base 11 and the outer side of the arc-shaped shaft arm 12, and connecting the pre-tightening assembly 16 between the base 11 and the inner side of the arc-shaped shaft arm 12, the outer side rolling and the inner side pre-tightening of the arc-shaped shaft arm 12 may be achieved, and the synergistic effect of the rolling assembly 15 and the pre-tightening assembly 16 on the arc-shaped shaft arm 12 may be improved, such that the arc-shaped shaft arm 12 achieves smooth rotation while also having a high rotation accuracy.

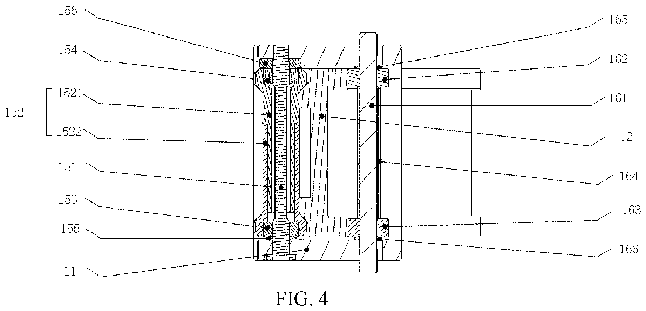

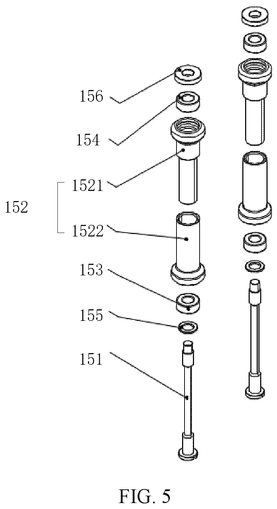

As shown in FIG. 4, which is a schematic longitudinal cross-sectional structural diagram showing the connection between an arc-shaped shaft arm and a base of the gimbal shown in FIG. 1, and FIG. 5, which is a schematic exploded structural view of a rolling assembly shown in FIG.4, the rolling assembly 15 includes: a middle shaft 151 and a roller 152 that is able to rotate around the middle shaft 151. The middle shaft 151 may be fixed on the base 11, and the roller 152 may be connected to the arc-shaped shaft arm 12. Since the roller 152 is connected to the arc-shaped shaft arm 12 and is able to rotate around the middle shaft 151, the arc-shaped shaft arm 12 may rotate around the middle shaft 151 by rotating the roller 152 around the middle shaft 151. The middle shaft 151 may be used to limit the rotation of the arc-shaped shaft arm 12 to improve the rotation accuracy of the arc-shaped shaft arm 12 on the base 11.

As shown in FIG. 4 and FIG. 5, the roller 152 includes a first roller 1521 and a second roller 1522 arranged along the axial direction of the middle shaft 151. The first roller 1521 and the second roller 1522 may be connected, and the first roller 1521 and the second roller 1522 may both be sleeved outside the middle shaft 151 and may rotate around the middle shaft 151. By splitting the roller 152 into the first roller 1521 and the second roller 1522 arranged along the axial direction of the middle shaft 151, the length of the single roller 152 may be reduced, which is convenient for processing the roller 152.

As shown in FIG. 4, the second roller 1522 at least partially extends into the first roller 1521 along the axial direction of the middle shaft 151, and is interference-fitted with the first roller 1521, to achieve a fixed connection between the first roller 1521 and the second roller 1522 by means of interference fit. Therefore, during the rotation around the middle shaft 151, the first roller 1521 and the second roller 1522 may rotate together as a whole, to improve the rotation stability of the first roller 1521 and the second roller 1522.

Optionally, the rolling assembly 15 may further include: a first bearing 153 and a second bearing 154. The first bearing 153 may be located at one end of the first roller 1521 away from the second roller 1522, the outer ring of the first bearing 153 may be connected to the first roller 1521, and the inner ring of the first bearing 153 may be connected to the middle shaft 151, to realize the rotation of the first roller 1521 around the middle shaft 151. The first roller 1521 may rotate around the middle shaft 151 with small friction and smooth rotation. The second bearing 154 may be located at one end of the second roller 1522 away from the first roller 1521, the outer ring of the second bearing 154 may be connected to the second roller 1522, and the inner ring of the second bearing 154 may be connected to the middle shaft 151, to realize the rotation of the second roller 1522 around the middle shaft 151. The second roller 1522 may rotate around the middle shaft 151 with small friction and smooth rotation.

Optionally, the rolling assembly 15 may further include: a first gasket 155. The first gasket 155 may be connected between the second bearing 154 and the base 11, and the outer diameter of the first gasket 155 may be larger than the inner ring of the second bearing 154 and smaller than the outer ring of the second bearing 154, such that a gap is formed between the outer ring of the second bearing 154 and the base 11 to prevent the outer ring of the second bearing 154 from contacting the base 11 to form friction and affect the rotation of the roller 152. Therefore, the rotation friction of the roller 152 may be reduced and the smoothness of the rotation of the roller 152 may be improved.

As shown in FIG. 4 and FIG. 5, the rolling assembly 15 also includes a pre-tightening nut 156 which may be located on the side of the first bearing 153 away from the second bearing 154 and may be sleeved outside the middle shaft 151 to clamp the first bearing 153, the first roller 1521, the second roller 1522 and the second bearing 154 on the base 11. In actual applications, the pre-tightening nut 156 may be threadedly matched with the middle shaft 151, and the lower end may be pressed into the second bearing 154. After tightening the pre-tightening nut 156 and the middle shaft 151, the pre-tightening nut 156 may clamp the first bearing 153, the first roller 1521, the second roller 1522, and the second bearing 154 on the base 11, thereby realizing precise positioning and tightening of the rolling assembly 15 and the base 11. Also, the first bearing 153 and the second bearing 154 may be pre-tightened to eliminate clearance and realize high-precision rotation of the first bearing 153 and the second bearing 154.

Optionally, the first roller 1521 may be provided with a first inclined surface protruding toward the arc-shaped shaft arm 12, and the arc-shaped shaft arm 12 may be provided with a second inclined surface at a position corresponding to the first inclined surface. The first inclined surface may abut against the second inclined surface. The second roller 1522 may be provided with a third inclined surface protruding toward the arc-shaped shaft arm 12, and the arc-shaped shaft arm 12 may be provided with a fourth inclined surface at a position corresponding to the third inclined surface. The third inclined surface may abut against the fourth inclined surface.

In practical applications, the axial movement of the arc-shaped shaft arm 12 may be limited by the abutment between the first inclined surface and the second inclined surface, and the abutment between the third inclined surface and the fourth inclined surface, to avoid the axial linkage movement of the arc-shaped shaft arm 12 and further improve the rotation accuracy of the arc-shaped shaft arm 12 around the second rotation axis.

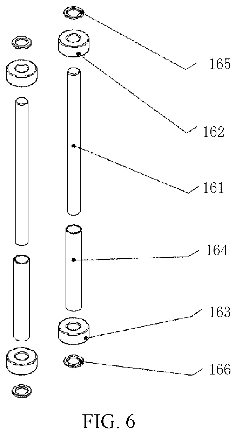

As shown in FIG. 6, which is a schematic exploded structural view of a pre-tightening assembly in the structure shown in FIG. 4, a receiving member may be provided on the base 11, and the receiving member may be communicated with the avoidance space. The pre-tightening assembly 16 may be arranged in the receiving member. After the pre-tightening assembly 16 moves to the target position in the receiving member, the pre-tightening assembly 16 may be fixed in the receiving member to provide a pre-tightening force and compensate for the processing and component error.

In practical applications, during the assembling process of the gimbal, the position of the pre-tightening assembly 16 in the receiving member may be adjusted according to actual needs until the pre-tightening assembly 16 moves to the target position. When the pre-tightening assembly 16 arrives at the target position, the pre-tightening assembly 16 may provide a suitable pre-tightening force to the arc-shaped shaft arm 12 to tighten the arc-shaped shaft arm 12 with the base 11. At this time, the pre-tightening assembly 16 may be fixed in the receiving member by some connection methods such as bonding or clamping, such that the pre-tightening assembly 16 may be kept in the target position. Therefore, during the rotation of the arc-shaped shaft arm 12 on the base 11, the pre-tightening assembly 16 may provide a constant pre-tightening force to the arc-shaped shaft arm 12 and compensate for the processing error, thereby improving the rotation accuracy of the arc-shaped shaft arm 12 on the base 11.

Optionally, the length extension direction of the receiving member may be the radial direction of the arc-shaped shaft arm 12. Since the pre-tightening assembly 16 may only move along the length extension direction of the receiving member, when the length extension direction of the receiving member is the radial direction of the arc-shaped shaft arm 12, the pre-tightening assembly 16 may provide a radial pre-tightening force to the arc-shaped shaft arm 12 by moving along the length extension direction of the receiving member, and the arc-shaped shaft arm 12 may only rotate around its axial direction, to improve the rotation accuracy of the arc-shaped shaft arm 12.

As shown in FIG. 6, the pre-tightening assembly 16 includes: a pre-tightening pin 161, a third bearing 162 and a fourth bearing 163. The third bearing 162 and the fourth bearing 163 may be sleeved outside the pre-tightening pin 161, the outer rings of the third bearing 162 and the fourth bearing 163 may be connected to the arc-shaped shaft arm 12, and the inner rings of the third bearing 162 and the fourth bearing 163 may be connected to the pre-tightening pin 161. The pre-tightening pin 161 may penetrate through the receiving member and fixed in the receiving member. By arranging the third bearing 162 and the fourth bearing 163 between the pre-tightening pin 161 and the arc-shaped shaft arm 12, the arc-shaped shaft arm 12 may be rotated around the pre-tightening pin 161, and the rotation friction of the arc-shaped shaft arm 12 around the pre-tightening pin 161 may be small and the rotation may be smooth. Therefore, during the rotation of the arc-shaped base 11, the arc-shaped base 11 may fit on the pre-tightening pin 161 and may rotate around the pre-tightening pin 161, such that the pre-tightening pin 161 may provide a constant pre-tightening force to the arc-shaped shaft arm 12.

Optionally, the pre-tightening pin 161 may be bonded into the receiving member. By bonding the pre-tightening pin 161 to the receiving member, the pre-tightening assembly 16 may be fixed in the receiving member of the base 11. In actual application, after the pre-tightening assembly 16 moves to the target position, the pre-tightening pin 161 may be bonded to the receiving member using an adhesive medium such as glue or tape, which may be easy to implement and may reliably connect the pre-tightening pin 161 to the receiving member.

It should be understood that in actual application, in some other embodiments, the connection method of the pre-tightening pin 161 in the receiving member may also include snap connection, welding, or threaded connection, etc. The embodiments of the present disclosure do not specifically limit the fixing connection method of the pre-tightening pin 161 in the receiving member.

Optionally, two ends of the pre-tightening pin 161 may be at least partially exposed outside the receiving member, such that the position of the pre-tightening pin 161 may be adjusted by using an operating tool such as a wrench to clamp the parts of the pre-tightening pin 161 exposed outside the receiving member, thereby improving the operability and efficiency of the movement of the pre-tightening assembly 16.

As shown in FIG. 6, the pre-tightening assembly 16 also includes a pre-tightening limit sleeve 164 which is sleeved outside the limit pin and abuts between the third bearing 162 and the fourth bearing 163. The pre-tightening limit sleeve 164 may be used to limit the position of the third bearing 162 and the fourth bearing 163 to prevent the third bearing 162 and the fourth bearing 163 from axially moving in series, to further improve the pre-tightening reliability of the pre-tightening assembly 16.

As shown in FIG. 6, the pre-tightening assembly 16 also includes: a second gasket 165 and a third gasket 166. The second gasket 165 may be connected between the third bearing 162 and the base 11. The outer diameter of the second gasket 165 may be larger than the inner ring of the third bearing 162 and smaller than the outer ring of the third bearing 162, such that a gap is formed between the outer ring of the third bearing 162 and the base 11 to prevent the outer ring of the third bearing 162 from contacting the base 11 to form friction and affect the rotation of the third bearing 162. Therefore, the rotation friction of the third bearing 162 may be reduced and the rotation smoothness of the third bearing 162 may be improved. The third gasket 166 may be connected between the fourth bearing 163 and the base 11. The outer diameter of the third gasket 166 may be larger than the inner ring of the fourth bearing 163 and smaller than the outer ring of the fourth bearing 163, to form a gap between the outer ring of the fourth bearing 163 and the base 11. Therefore, the outer ring of the fourth bearing 163 and the base 11 may be prevented from contacting and forming friction to affect the rotation of the fourth bearing 163, to reduce the rotation friction of the fourth bearing 163 and improve the smoothness of the rotation of the fourth bearing 163.

As shown in FIG. 6, in one embodiment, the gimbal includes two pre-tightening assemblies 16, and the two pre-tightening assemblies 16 may be arranged at intervals, such that the ability of the pre-tightening assemblies 16 to resist loads may be improved and the reliability and service life of the pre-tightening assemblies 16 may be improved. Further, over-positioning may be prevented, and the installation of the pre-tightening assemblies 16 may be facilitated.

In embodiments of the present disclosure, the two pre-tightening assemblies 16 may be parallel or non-parallel to each other, and those skilled in the art may set them according to actual needs. The embodiments of the present disclosure do not specifically limit the relative position relationship of the two pre-tightening assemblies 16.

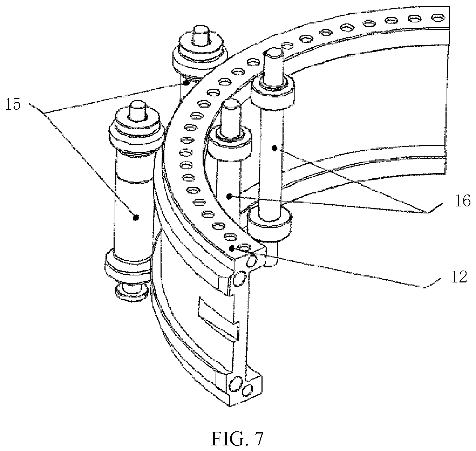

As shown in FIG. 7, which is a schematic structural diagram of the arc-shaped arm, the rolling assembly, and the pre-tightening assembly shown in FIG. 4, the rolling assembly 15 is connected to the outer side of the arc-shaped shaft arm 12, and the pre-tightening assembly 16 is connected to the inner side of the arc-shaped shaft arm 12 to achieve the outer rolling and inner pre-tightening of the arc-shaped shaft arm 12. Therefore, the synergistic effect of the rolling assembly 15 and the pre-tightening assembly 16 on the arc-shaped shaft arm 12 may be improved, such that the arc-shaped shaft arm 12 may achieve smooth rotation while also having a high rotation accuracy.

Further, as shown in FIG. 7, since the contact between the arc-shaped shaft arm 12 and the rolling assembly 15 is an inclined surface contact, the actual movement of the arc-shaped shaft arm 12 after being subjected to force may be a rotation along the intersection of the normal line of the inclined surface. By the pre-tightening assembly 16 abutting against the inner surface of the arc-shaped shaft arm 12, its rotation in this direction may be restricted, and all degrees of freedom of the arc-shaped shaft arm 12 except along the second rotation axis may be restricted to form its support. Because of the existence of the inclined surface, during assembling, the arc-shaped shaft arm 12 may automatically maintain a four-point contact with the rolling assembly 15. To ensure good contact between the four bearings of the pre-tightening assembly 16 and the arc-shaped shaft arm 12 (two third bearings 162 and two fourth bearings 163), the four bearings may need to be pre-tightening separately to avoid over-positioning.

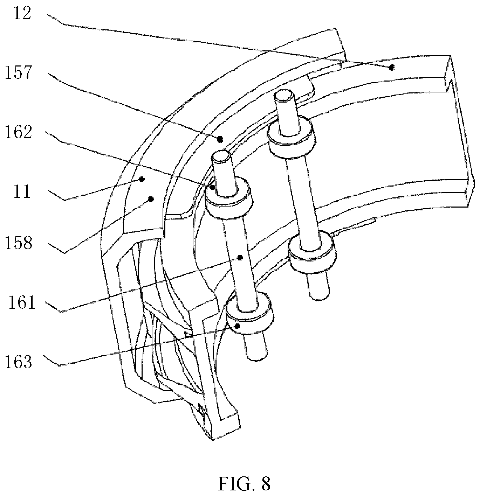

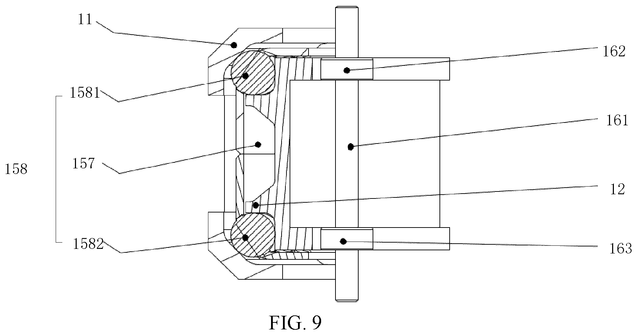

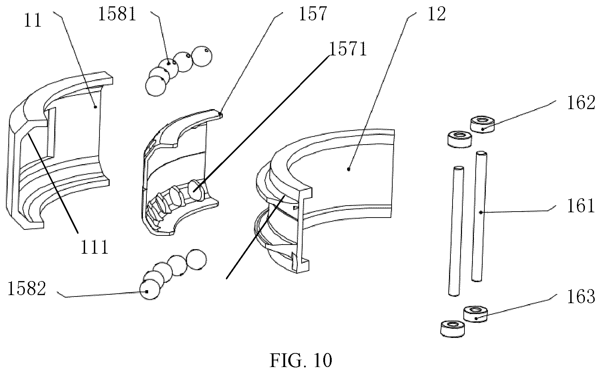

In another embodiment, as shown in FIG. 8, which is a schematic structural diagram of another rolling assembly, FIG. 9, which is a schematic longitudinal cross-sectional structural view of the rolling assembly shown in FIG. 8, and FIG. 10, which is a schematic exploded structural view of the rolling assembly shown in FIG. 8, the rolling assembly 15 includes: a second retaining frame 157 and balls 158. The second retaining frame 157 may be arranged between the outer side of the arc-shaped shaft arm 12 and the base 11, and the balls 158 may be embedded in the second retaining frame 157 and may be connected to the arc-shaped shaft arm 12 and the base 11 in a rolling manner. The arc-shaped shaft arm 12 may rotate on the base 11 through the balls 158 rolling between the arc-shaped shaft arm 12 and the base 11, and the structure is simple.

As shown in FIG. 8 and FIG. 9, the balls 158 include: first balls 1581 and second balls 1582 which are spaced apart from each other. The first balls 1581 may be embedded in the upper vertex of the second retaining frame 157 to enable the upper side of the arc-shaped shaft arm 12 to roll on the base 11, and the second balls 1582 may be embedded in the lower vertex of the second retaining frame 157 to enable the lower side of the arc-shaped shaft arm 12 to roll on the base 11. Since both the upper and lower sides of the arc-shaped shaft arm 12 may roll relative to the base 11, the upper and lower sides of the arc-shaped shaft arm 12 may roll evenly and stably relative to the base 11, thereby improving the rotation accuracy of the arc-shaped shaft arm 12 on the base 11.

As shown in FIG. 10, a plurality of ball mounting holes 1571 is provided on the second retaining frame 157, and one ball 158 may be embedded in one corresponding ball mounting hole 1571 and may roll in the corresponding ball mounting hole 1571. In practical applications, the ball mounting hole 1571 may be used to mount and limit the ball 158, such that the ball 158 may roll between the arc-shaped shaft arm 12 and the base 11. At the same time, the ball 158 may be kept in a constant position to prevent the ball 158 from falling and moving, to improve the rotation accuracy between the arc-shaped shaft arm 12 and the base 11.

As shown in FIG. 10, the base 11 is provided with a wedge-shaped roll groove 111 at a position corresponding to each ball 158, and the arc-shaped shaft arm 12 may be provided with a step-shaped roll groove 121 at a position corresponding to each ball 158. The step-shaped roll groove 121 may have two groove walls connected to each other, and the ball 158 may abut against the groove walls of the wedge-shaped roll groove 111 and the step-shaped roll groove 121. Therefore, during the rolling process of the ball 158, the ball 158 may maintain one-point contact with the wedge-shaped roll groove 111 of the base 11 and two-point contact with the step-shaped roll groove 121 of the arc-shaped shaft arm 12, thereby improving the rolling stability, providing torsional stiffness which is as largest as possible, and minimum rolling friction to achieve reliable rotation of the arc-shaped shaft arm 12 on the base 11.

In some optional embodiments of the present disclosure, a receiving member may be provided on the base 11, and the receiving member may be communicated with the avoidance space. The pre-tightening assembly 16 may pass through the receiving member and move inside the receiving member to adjust the pre-tightening force.

In actual applications, during the use of the gimbal, the pre-tightening assembly 16 may dynamically adjust its position to dynamically adjust the magnitude of the pre-tightening force according to actual needs, and may automatically pre-tighten during the rotation of the arc-shaped shaft arm 12.

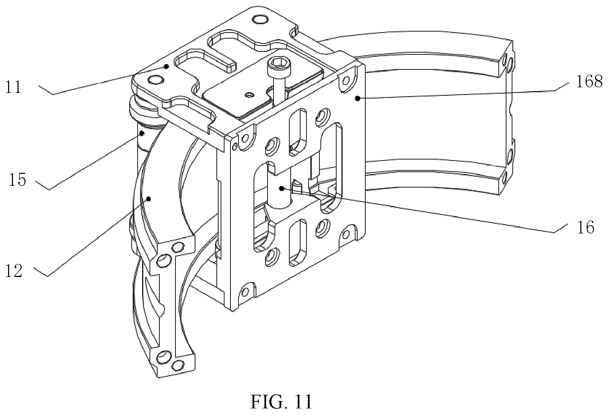

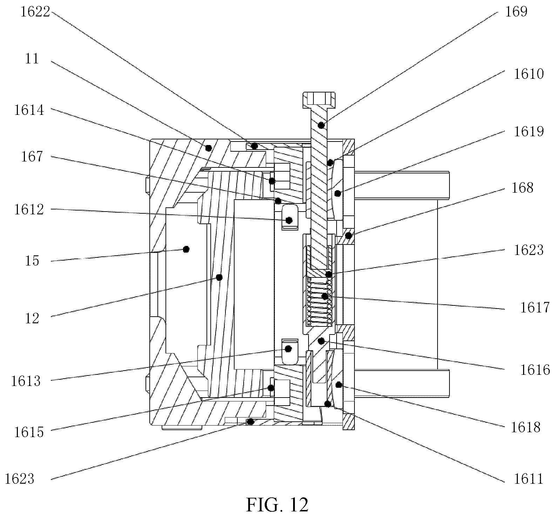

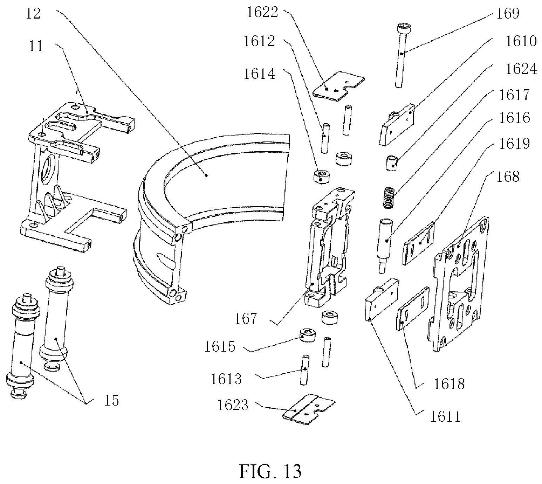

In another embodiment, as shown in FIG. 11, which is another schematic structural diagram of an arc-shaped arm, a rolling assembly, and a pre-tightening assembly consistent with embodiments of the present disclosure, FIG. 12, which is a schematic longitudinal cross-sectional structural view of the structure shown in FIG. 11, and FIG. 13, which is a schematic exploded structural view the structure shown in FIG. 11, the pre-tightening assembly 16 includes: a bearing bracket 167, a cover plate 168, a pre-tightening member 169 and a push member. The bearing bracket 167 and the cover plate 168 may be snap-fitted and connected, and a second accommodation space for accommodating the pre-tightening member 169 and the push member may be formed therebetween. The bearing bracket 167 may be close to the arc-shaped shaft arm 12 and may be rotatably connected to the arc-shaped shaft arm 12. The pre-tightening member 169 and the push member may both be arranged in the second accommodation space. The pre-tightening member 169 may be connected to the push member, and the pre-tightening member 169 may drive the push member to move toward the arc-shaped shaft arm 12 to provide a pre-tightening force to the arc-shaped shaft arm 12.

In actual application, during the rotation of the arc-shaped shaft arm 12, the pre-tightening member 169 may drive the push member to move toward the arc-shaped shaft arm 12, to push the arc-shaped shaft arm 12 to move and provide a pre-tightening force to the arc-shaped shaft arm 12. By adjusting the amount of movement of the arc-shaped shaft arm 12 pushed by the push member, the magnitude of the pre-tightening force may be dynamically adjusted to achieve automatic pre-tightening during the rotation of the arc-shaped shaft arm 12.

Optionally, the pre-tightening assembly 16 may further include a rolling mechanism arranged on a side of the bearing bracket 167 close to the arc-shaped shaft arm 12 and rotatably connecting the bearing bracket 167 to the arc-shaped shaft arm 12. In actual application, by setting the rolling mechanism, the relative rolling between the arc-shaped shaft arm 12 and the bearing bracket 167 may be achieved, thereby improving the smoothness of the pre-tightening of the arc-shaped shaft arm 12.

Optionally, the rolling mechanism may include: a first pin shaft 1612, a second pin shaft 1613, a fifth bearing 1614 and a sixth bearing 1615. The first pin shaft 1612 may be connected to the bearing bracket 167, the inner ring of the fifth bearing 1614 may be connected to the first pin shaft 1612, and the outer ring of the fifth bearing 1614 may be connected to the arc-shaped shaft arm 12. By arranging the fifth bearing 1614 between the first pin shaft 1612 and the arc-shaped shaft arm 12, the arc-shaped shaft arm 12 may be rotated around the first pin shaft 1612, and the arc-shaped shaft arm 12 may rotate with small friction around the first pin shaft 1612 and smoothly. The second pin shaft 1613 may be connected to the bearing bracket 167, the inner ring of the sixth bearing 1615 may be connected to the second pin shaft 1613, and the outer ring of the sixth bearing 1615 may be connected to the arc-shaped shaft arm 12. By arranging the sixth bearing 1615 between the second pin shaft 1613 and the bearing bracket 167, the bearing bracket 167 may be rotated around the second pin shaft 1613, and the bearing bracket 167 may rotate smoothly with low friction around the second pin shaft 1613.

Optionally, the pre-tightening member 169 may be a pre-tightening screw, and the push member may include a first push member 1610 and a second push member 1611. Sides of the first push member 1610 and the second push member 1611 close to the bearing bracket 167 may match the bearing bracket 167 through inclined surfaces. The pre-tightening screw may be threadedly engaged with the first push member 1610 and the second push member 1611, and the rotation of the pre-tightening screw may drive the first push member 1610 and the second push member 1611 to move along the axial direction of the pre-tightening screw. The movement of the first push member 1610 and the second push member 1611 along the axial direction of the pre-tightening screw may push the bearing bracket 167 toward or away from the arc-shaped shaft arm 12. The movement of the bearing bracket 167 toward or away from the arc-shaped shaft arm 12 may push the arc-shaped shaft arm 12 to move, providing a pre-tightening force to the arc-shaped shaft arm 12, and achieving automatic pre-tightening of the arc-shaped shaft arm 12 during its rotation.

In application, in one embodiment, during the process of tightening the pre-tightening screw, the first push member 1610 and the second push member 1611 may be pushed out at two ends along the axial direction of the pre-tightening screw. Because of the presence of the inclined surfaces on the first push member 1610 and the second push member 1611, the bearing bracket 167 may be pushed in along the radial direction of the arc-shaped shaft arm 12 to achieve the pre-tightening of the arc-shaped shaft arm 12 on the base 11.

Optionally, the pre-tightening assembly 16 may also include: a guide sleeve 1616 and a first elastic member 1617. One end of the guide sleeve 1616 may be connected to the second push member 1611, and the other end of the guide sleeve 1616 may be provided with an accommodation groove. The first elastic member 1617 may be connected to the bottom of the accommodation groove. The pre-tightening screw may be inserted into the accommodation groove and abut against the first elastic member 1617. Since the first elastic member 1617 has an automatic restoring force, under the elastic force of the first elastic member 1617, the pre-tightening force may be easily adjusted and the small gap may be compensated to keep the pre-tightening force constant. Therefore, the pre-tightening reliability of the pre-tightening assembly 16 for the arc-shaped shaft arm 12 may be improved.

Optionally, the pre-tightening assembly 16 may also include: a first arc slider 1618 and a second arc slider 1618. The first arc slider 1618 may be connected to the cover plate 168 and cooperate with the first push member 1610 in an arc. The second arc slider 1619 may be connected to the cover plate 168 and cooperate with the second push member 1611 in an arc. The first arc slider 1618 and the second arc slider 1619 may achieve fine adjustment of the angles of the first push member 1610 and the second push member 1611, and maintain reliable contact between the first push member 1610, the second push member 1611 and the cover plate 168.

Optionally, the pre-tightening assembly 16 may also include a first limit plate 1622 and a second limit plate 1623. The first limit plate 1622 and the second limit plate 1623 may be fixed to the upper and lower end surfaces of the bearing bracket 167 by fasteners such as screws and bolts. The first limit plate 1622 and the second limit plate 1623 may not only fix the positions of the first pin shaft 1612 and the second pin shaft 1613, but also limit the upper and lower movement limit positions of the bearing bracket 167 on the base 11. A certain gap may be left between the first limit plate 1622 and the second limit plate 1623 and the base 11, such that they may move slightly to only limit the freedom of their radial movement along the arc-shaped shaft arm 12.

Optionally, the pre-tightening assembly 16 may further include a pre-tightening pad 1624. The pre-tightening pad 1624 and the first elastic member 1617 may be sequentially installed in the guide sleeve 1616, and the pre-tightening pad 1624 may abut against the end of the pre-tightening screw.

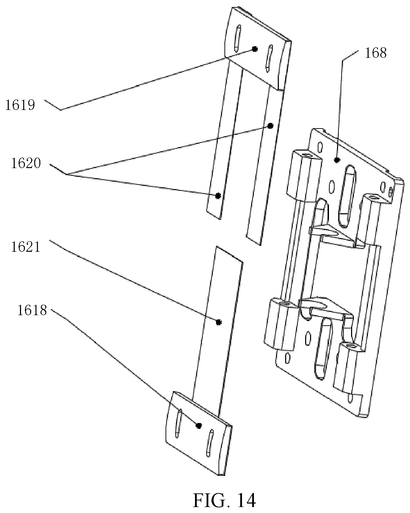

In one embodiment, as shown in FIG. 14, which is a schematic structural diagram of a first arc slider and a second arc slider, the first arc slider 1618 is provided with a first friction plate 1620 extending toward the second arc slider 1619, and the first friction plate 1620 at least partially extends between the second arc slider 1619 and the cover plate 168. The second arc slider 1619 is provided with a second friction plate 1621 extending toward the first arc slider 1618, and the second friction plate 1621 at least partially extends between the first arc slider 1618 and the cover plate 168, to prevent the first arc slider 1618 and the second arc slider 1619 from locking with the arc shaft arm 12 during the process of pushing the first push member 1610 and the second push member 1611 to move. Because of the friction between the bottom of the first friction plate 1620 the second friction plate 1621 and the cover plate 168, the self-locking between the first arc slider 1618 and the second arc slider 1619 may be achieved. Only when the two ends of the first friction plate 1620 and the second friction plate 1621 are loosened at the same time and the upper and lower gaps are uniform, the first arc slider 1618 and the second arc slider 1619 may move up and down to achieve automatic pre-tightening of the arc shaft arm 12. Therefore, the working conditions of structural deformation and wear may be distinguished from the vibration of the gimbal.

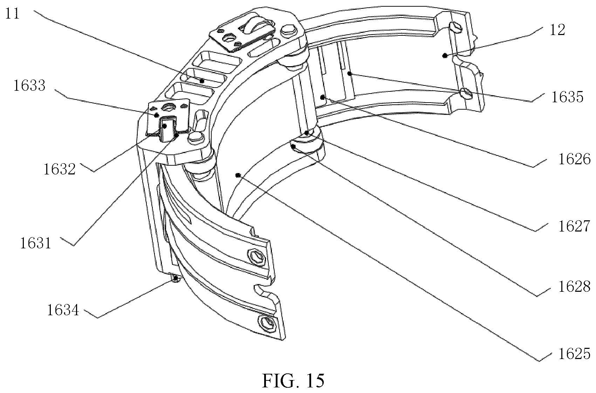

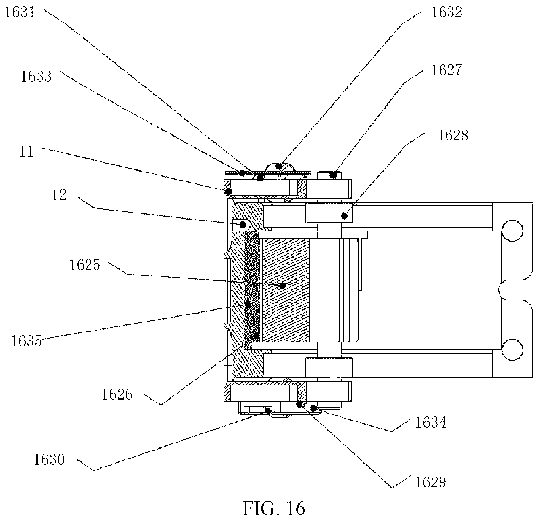

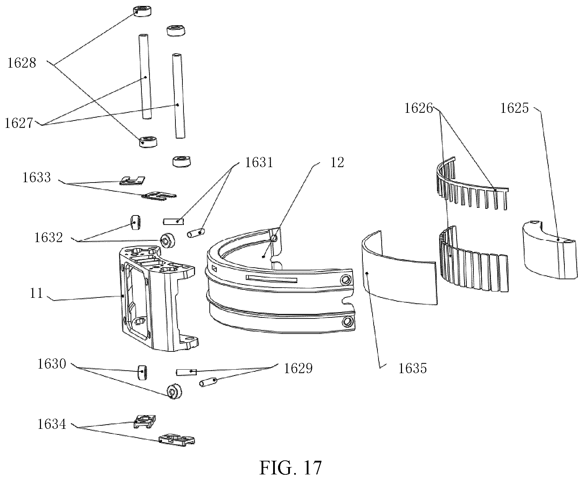

In one embodiment, as shown in FIG. 15, which is a schematic structural diagram of another arc shaft arm, rolling assembly, and pre-tightening assembly, FIG. 16, which is a schematic longitudinal cross-sectional structural view of the structure shown in FIG. 15, and FIG. 17, which is a schematic exploded structural view of the structure shown in FIG. 15, the pre-tightening assembly 16 includes: a first coil assembly 1625 and a first magnetic assembly 1626. The first coil assembly 1625 may be fixed to the base 11, the first magnetic assembly 1626 may be fixed to the arc-shaped shaft arm 12, and the first magnetic assembly 1626 and the first coil assembly 1625 may be arranged facing and spaced apart from each other. The first coil assembly 1625 may drive the arc-shaped shaft arm 12 to rotate relative to the base 11 when powered on to provide a pre-tightening force. Since the first magnetic assembly 1626 and the first coil assembly 1625 realize non-contact pre-tightening through the effect of magnetic attraction, the rotation friction of the arc-shaped shaft arm 12 may be greatly reduced, thereby reducing the rotational power of the arc-shaped shaft arm 12.

For example, the first coil assembly 1625 may include an iron core and a winding, and the first magnetic assembly 1626 may include a magnet and a retaining frame for fixing and supporting the magnet.

As shown in FIG. 15 to FIG. 17, the pre-tightening assembly 16 further includes: a bearing pin 1627 and a carrier bearing 1628. The first coil assembly 1625 may be fixed to the base 11 through the bearing pin 1627. The carrier bearing 1628 may be sleeved outside the bearing pin 1627, and the outer ring of the carrier bearing 1628 may be connected to the arc-shaped shaft arm 12 to support the arc-shaped shaft arm 12 to rotate relative to the bearing pin 1627. By arranging the carrier bearing 1628 between the bearing pin 1627 and the arc-shaped shaft arm 12, the arc-shaped shaft arm 12 may rotate around the bearing pin 1627, and the arc-shaped shaft arm 12 may rotate around the bearing pin 1627 with low friction and smooth rotation.

In actual applications, the magnetic attraction between the first coil assembly 1625 and the first magnetic assembly 1626 may form a relatively stable pre-tightening force between the arc-shaped shaft arm 12 and the first coil assembly 1625. Because of the existence of the air gap therebetween, the arc-shaped shaft arm 12 may rotate freely along the bearing pin 1627 under the support of the carrier bearing 1628.

The pre-tightening assembly 16 may further include: a fixed pin 1629, a fixed bearing 1630, a floating pin 1631, a floating bearing 1632, and a second elastic member 1633. The fixed pin 1629 may be connected to the base 11, and the fixed bearing 1630 may be sleeved outside the fixed pin 1629. The second elastic member 1633 may be connected to the base 11, and the floating pin 1631 may be connected to the second elastic member 1633. The floating bearing 1632 may be sleeved outside the floating pin 1631. Under the elastic action of the second elastic member 1633, the floating pin 1631 may drive the floating bearing 1632 to slide in the avoidance space. The second elastic member 1633 may press the floating bearing 1632 on the arc shaft arm 12.

As shown in FIG. 15 to FIG. 17, the pre-tightening assembly 16 further includes a fixation pressing plate 1634 which may be connected to the fixed pin 1629 and the base 11, to fix the fixed pin 1629 to the base 11. For example, the fixed bearing 1630 may be mounted at the fixed pin 1629 and installed on the base 11 by screws through the fixation pressing plate 1634.

In practical applications, the floating bearing 1632 may be mounted at the floating pin 1631, and the second elastic member 1633 may be mounted at the base 11 by screws. The second elastic member 1633 may be a spring with an opening, and one end of the opening may be pressed on two sides of the floating pin 1631. The floating pin 1631 and the floating bearing 1632 may slide up and down in the receiving member on the base 11, and may be pressed on the arc-shaped shaft arm 12 by the second elastic member 1633. Therefore, the arc-shaped shaft arm 12 may be vertically limited downward by the fixed pin 1629, the fixed bearing 1630, and the fixed pressure plate 1634, and may be limited upward by the floating pin 1631, the floating bearing 1632, and the second elastic member 1633. Because of the elastic force of the second elastic member 1633, the arc-shaped shaft arm 12 may also belong to the elastic pre-tightening form. Since the arc-shaped shaft arm 12 adopts adaptive elastic pre-tightening in the radial and axial directions, the processing accuracy requirements for each component may be reduced. At the same time, the unbalanced attraction between the first coil assembly 1625 and the first magnetic assembly 1626 may be utilized to reduce the friction resistance of rotation, improving dynamic performance and stability, and ensuring a higher support stiffness.

Optionally, the pre-tightening assembly 16 may further include: a first yoke 1635. The first yoke 1635 may be bonded to the inner side of the arc-shaped shaft arm 12, and the first yoke 1635 may be used to achieve magnetic isolation between the first magnetic assembly 1626 and the arc-shaped shaft arm 12, to prevent the magnetic force of the first magnetic assembly 1626 from affecting the operation of other components.

In some optional embodiments, the second driver mechanism 13 may include an electromagnetic driver mechanism. Since the electromagnetic drive mode is a high-precision drive mode, when the second driver mechanism 13 is an electromagnetic drive mode, the driving accuracy of the second driver mechanism 13 may be improved.

As shown in FIG. 2, in one embodiment, the electromagnetic driver mechanism may include: a coil assembly 131 and a magnetic assembly 132. The coil assembly 131 may be connected to the base 11, and the magnetic assembly 132 may be connected to the arc-shaped shaft arm 12. The coil assembly 131 and the magnetic assembly 132 may be arranged facing and spaced apart from each other, and the coil assembly 131 may drive the arc-shaped shaft arm 12 connected to the magnetic assembly 132 to rotate when powered on, thereby realizing the rotation of the arc-shaped shaft arm 12 on the base 11.

In practical applications, the first coil assembly 1625 may include: an iron core and a coil wound around the iron core, where the iron core may be fixedly connected to the base 11 to connect the first coil assembly 1625 to the base 11. The first magnetic assembly 1626 may include a first retaining frame and a magnetic member connected to the first retaining frame, where the first retaining frame may be connected to the inner side of the arc-shaped shaft arm 12 to connect the first magnetic assembly 1626 to the arc-shaped shaft arm 12.

As shown in FIG. 1 to FIG. 3, the electromagnetic driver mechanism may also include: a positioning pin 133 and a positioning sleeve 134. The iron core may be sleeved outside the positioning pin 133, and the positioning sleeve 134 may be sleeved outside the iron core and abuts against the base 11. In practical applications, the coil assembly 131 may be fixed on the base 11 by the positioning pin 133, and the upper and lower limits of the coil assembly 131 may be adjusted and limited by the positioning sleeve 134, to prevent the coil assembly 131 from moving up and down, thereby improving the rotation accuracy of the coil assembly 131 driving the magnetic assembly 132.

In one embodiment, the electromagnetic driver mechanism may also include: a yoke 135, and the yoke 135 may be bonded to the inner side of the arc-shaped shaft arm 12. The yoke 135 may be used to achieve magnetic isolation between the magnetic assembly 132 and the arc-shaped shaft arm 12 to prevent the magnetic force of the magnetic assembly 132 from affecting the operation of other components.

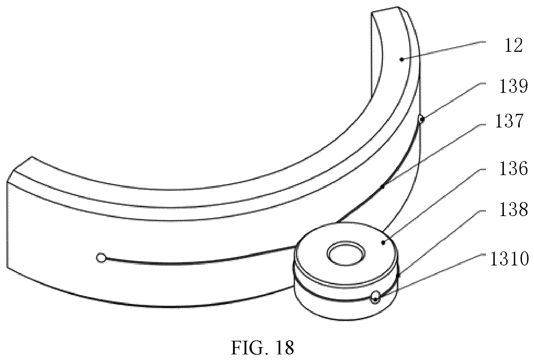

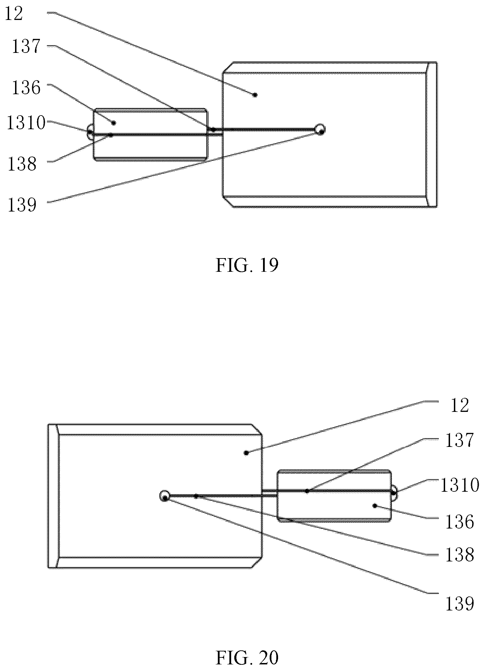

As shown in FIG. 18, which is a schematic structural diagram of a second driver mechanism, FIG. 19, which is a schematic side view of the second driver mechanism shown in FIG. 18, and FIG. 20, which is another schematic side view of the second driver mechanism shown in FIG. 18, the second driver mechanism 13 may specifically include: a motor 136 and a transmission member connected to the motor 136. The motor 136 may be fixed on the base 11, the transmission member may be connected to the arc-shaped shaft arm 12, and the motor 136 may drive the transmission member to drive the arc-shaped shaft arm 12 to rotate. Since the driving method of the motor 136 may be simple in structure and low in cost, when the driving member in the second driver mechanism 13 is the motor 136, the structure of the second driver mechanism 13 may be simple and low in cost.

As shown in FIG. 18 to FIG. 20, the transmission member includes a first transmission rope 137 and a second transmission rope 138. One end of the first transmission rope 137 may be connected to the motor 136, and the other end of the first transmission rope 137 may be connected to the arc-shaped shaft arm 12. Under the drive of the motor 136, the first transmission rope 137 may drive the arc-shaped shaft arm 12 to rotate along the first direction. One end of the second transmission rope 138 may be connected to the motor 136, and the other end of the second transmission rope 138 may be connected to the arc-shaped shaft arm 12. Under the drive of the motor 136, the second transmission rope 138 may drive the arc-shaped shaft arm 12 to rotate along the second direction. The second direction may be opposite to the first direction.

For example, the first direction may be clockwise and the second direction may be counterclockwise, or the first direction may be counterclockwise and the second reverse direction may be clockwise. The specific contents of the first direction and the second direction are not limited in the embodiments of the present disclosure.

Optionally, the first transmission rope 137 may be at least partially wound around the motor 136 along the second direction, and the second transmission rope 138 may be at least partially wound around the motor 136 along the first direction. Along the axial direction of the motor 136, the orthographic projections of the first transmission rope 137 and the second transmission rope 138 may be staggered on the motor 136 and the arc-shaped shaft arm 12.

Optionally, one end of the first transmission rope 137 may be welded to the arc-shaped shaft arm 12 through a first welding point 139, and the other end of the first transmission rope 137 may bypass the motor 136 along the second direction and be welded to the motor 136 through a second welding point 1310. The second transmission rope 138 may be arranged in a mirror image of the second transmission rope 138, that is, the two ends of the second transmission rope 138 may be welded to the arc-shaped shaft arm 12 and the motor 136 through the first welding point 139 and the second welding point 1310, respectively. Since the orthographic projections of the first transmission rope 137 and the second transmission rope 138 may be staggered between the motor 136 and the arc-shaped shaft arm 12, the first transmission rope 137 and the second transmission rope 138 may be better linked to realize the rotation of the arc-shaped shaft arm 12 along the first direction or the second direction.

Optionally, there may be a gap between the first transmission rope 137 and the second transmission rope 138 along the axial direction of the motor 136, to avoid mutual interference between the first transmission rope 137 and the second transmission rope 138, thereby improving the movement accuracy of the first transmission rope 137 and the second transmission rope 138.

For example, the first transmission rope 137 and the second transmission rope 138 may include at least one of a steel wire, a steel belt, or a nylon rope. The specific forms of the first transmission rope 137 and the second transmission rope 138 are not limited in the embodiments of the present disclosure.

Optionally, the radius of the arc-shaped shaft arm 12 may be larger than the radius of the motor 136, such that the rotation speed of the arc-shaped shaft arm 12 may be smaller than the rotation speed of the motor 136, thereby realizing a speed reduction transmission. Alternatively, the radius of the arc-shaped shaft arm 12 may be less than the radius of the motor 136, such that the rotation speed of the arc-shaped shaft arm 12 may be larger than the rotation speed of the motor 136, thereby realizing a speed increase transmission. The embodiments of the present disclosure do not specifically limit the size of the radius of the arc-shaped shaft arm 12 and the radius of the motor 136.

As shown in FIG. 1, the gimbal may further include a connector 17, and the first driver mechanism 10 may be connected to the connector 17. The connector 17 may be used as a component for connecting the gimbal with the unmanned aerial vehicle, and may be used to install the gimbal on the unmanned aerial vehicle.

In some embodiments, the gimbal may further include a shock-absorption assembly, which may be located between the connector 17 and the first driver mechanism 10, and the shock-absorption assembly may be used to filter high-frequency vibrations from the unmanned aerial vehicle or the outside world to improve the working stability of the gimbal.

Optionally, the shock-absorption assembly may include a shock-absorption bracket 18 and a shock-absorption ball 19. The first driver mechanism 10 may be connected to the shock-absorption bracket 18, and the shock-absorption bracket 18 may be connected to the connector 17 through the shock-absorption ball 19. Through the shock-absorption effect of the shock-absorption ball 19, high-frequency vibrations from the unmanned aerial vehicle or the outside world may be filtered to improve the working stability of the first driver mechanism 10 connected to the shock-absorption bracket 18.

Optionally, the first driver mechanism 10 may include a first motor, and the first motor may include a first rotor part and a first stator part. The first stator part may be connected to the shock-absorption bracket 18, and the first rotor part may be connected to the base 11. The first rotor part may rotate relative to the first stator part to drive the base 11 to rotate relative to the shock-absorption bracket 18. The rotation of the base 11 may drive the photographing device 20 to rotate around the first rotation axis.

In some embodiments of the present disclosure, extension arms 110 may be also provided at two ends of the arc-shaped shaft arm 12, and the third driver mechanism 14 may be installed on the extension arms 110. For example, the extension arms 110 may be connected to two ends of the arc-shaped shaft arm 12 by fasteners such as screws and bolts. The extension arms 110 may serve as connectors between the second rotation axis and the third rotation axis, responsible for bearing and converting angles.

Optionally, the extension arms 110 may be planar structures to facilitate the positioning and installation of the third driver mechanism 14 on the extension arms 110 to improve the installation efficiency and installation accuracy of the third driver mechanism 14 on the extension arms 110.

For example, the extension arms 110 may be connected to the arc-shaped shaft arm 12 by screws, bolts, and other fasteners, and the third driver mechanism 14 may also be connected to the extension arms 110 by screws, bolts, and other fasteners. The embodiments of the present disclosure do not specifically limit the connection method of the extension arms 110 on the arc-shaped shaft arm 12 and the connection method of the third driver mechanism 14 on the extension arms 110.

In some optional embodiments of the present disclosure, the gimbal may also include a position detection assembly 112, which may be connected to the arc-shaped shaft arm 12 to detect the rotation position of the arc-shaped shaft arm 12 relative to the base 11, to improve the rotation accuracy of the arc-shaped shaft arm 12.

Optionally, the position detection assembly 112 may include a Hall assembly, and the Hall assembly may include a magnetic assembly and a Hall sensor. The magnetic assembly may be arranged on the arc-shaped shaft arm 12, and the Hall sensor may be connected to the base 11. The arc-shaped shaft arm 12 may rotate to different positions on the base 11, and the size and direction of the magnetic field detected by the Hall sensor on the base 11 may be different correspondingly. Therefore, the rotation position of the arc-shaped shaft arm 12 relative to the base 11 may be detected by the size and direction of the magnetic field detected by the Hall sensor, and the structure may be simple and easy to implement.

Optionally, the magnetic assembly may include a plurality of auxiliary magnets 113 distributed in sequence along the circumference of the arc-shaped shaft arm 12. By setting the plurality of auxiliary magnets 113 distributed in sequence along the circumference of the arc-shaped shaft arm 12, the arc-shaped shaft arm 12 may be accurately detected at multiple rotation positions, thereby further improving the detection accuracy of the rotation position of the arc-shaped shaft arm 12.

Optionally, the Hall assembly may also include a magnet cover 114 which covers the outside of the auxiliary magnets 113. The magnet cover 114 may be used to protect the auxiliary magnets 113 to prevent external debris from being adsorbed on the auxiliary magnets 113, therefore improving the working accuracy and service life of the auxiliary magnets 113.

In some other embodiments, the position detection assembly 112 may also include at least one of a grating, a capacitive grating, or a magnetic grating. The specific form of the position detection assembly 112 is not limited in the embodiments of the present disclosure.

Optionally, the position detection assembly 112 may also include an original position detection sensor, such that the photographing device 20 may be automatically returned to the origin when the gimbal starts, to control the rotation angle of the photographing device 20.

For example, the original position detection sensor may include but is not limited to a reflective or transmissive photoelectric sensor, a micro switch, or a contact spring, etc. The specific content of the original position detection sensor is not limited in the embodiments of the present disclosure.

In the embodiments of the present disclosure, the gimbal may further include a control line 115. One end of the control line 115 may be electrically connected to an aircraft control panel, and the other end may sequentially pass through the first driver mechanism 10, the base 11, and the arc-shaped shaft arm 12, and electrically connected to the photographing device 20. The control line 115 may be extended and retracted with the rotation of the arc-shaped shaft arm 12. In the process of adjusting the position or angle of the photographing device 20, the control line 115 may maintain a stable connection relationship with the photographing device 20 through extension and retraction such that the reliability of the electrical connection between the photographing device 20 and the aircraft control panel is improved.

Optionally, a through hole for passing the control line 115 may be provided on the arc-shaped shaft arm 12, a wire ring 116 may be sleeved in the through hole, and the control line 115 may pass through the wire ring 116 to reduce the friction between the control line 115 and the arc-shaped shaft arm 12, to improve the smoothness of the extension and retraction of the control line 115 and extend the service life of the control line 115.

Optionally, the material of the wire ring 116 may include at least one of polyoxymethylene, polytetrafluoroethylene, or polyetheretherketone. Since materials such as polyoxymethylene, polytetrafluoroethylene, or polyetheretherketone have the advantages of good lubrication and wear resistance, when the wire ring 116 is made of the above materials, the movement friction of the control line 115 may be reduced, and the wear of the control line 115 may be reduced.

It should be noted that the connection and arrangement of the control line 115 may include but is not limited to the circumferential arrangement along the arc-shaped shaft arm 12, the radial arrangement along the arc-shaped shaft arm 12, the axial arrangement along the arc-shaped shaft arm 12, and various combinations thereof, as well as the routing scheme along other hollow shafts of the driving motor, etc. The embodiments of the present disclosure do not specifically limit the routing method of the control line 115.

Optionally, the gimbal may also include a seal structure which may be used for the arc-shaped shaft arm 12. The seal structure may prevent its moving parts, especially the hollow rotation of the arc-shaped shaft arm 12 and the driving structure, from being affected by the outside world when the gimbal is working, and prevent dust, gravel, water vapor, etc. from entering the inside of the gimbal. The gimbal may be designed with a dust cover and a sealing lip structure.

For example, the seal structure may include at least one of a labyrinth seal, a felt seal, a sealing ring seal, or a pressure differential seal. The specific content of the seal structure is not limited in the embodiments of the present disclosure.

In one embodiment, in the gimbal shown in FIG. 1, the first rotation axis may be a roll axis, the second rotation axis may be a yaw axis, and the third rotation axis may be a pitch axis, that is, the axis sequence of the three rotation axes may be roll axis-yaw axis-pitch axis. The roll axis may be fixed on the fuselage of the unmanned aerial vehicle, and the yaw axis and the pitch axis may be free axes. Correspondingly, in the gimbal shown in FIG. 1, the first driver mechanism 10 may be a roll axis driver mechanism, the second driver mechanism 13 may be a yaw axis driver mechanism, and the third driver mechanism 14 may be a pitch axis driver mechanism.

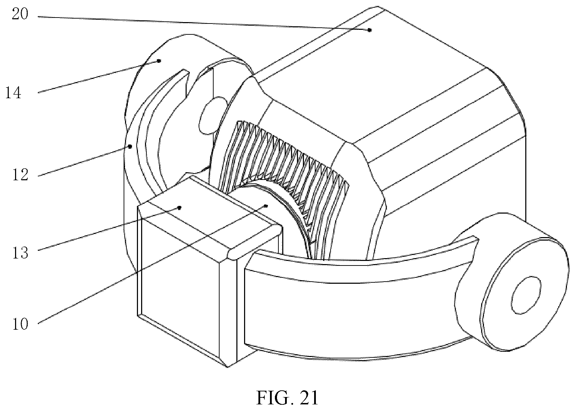

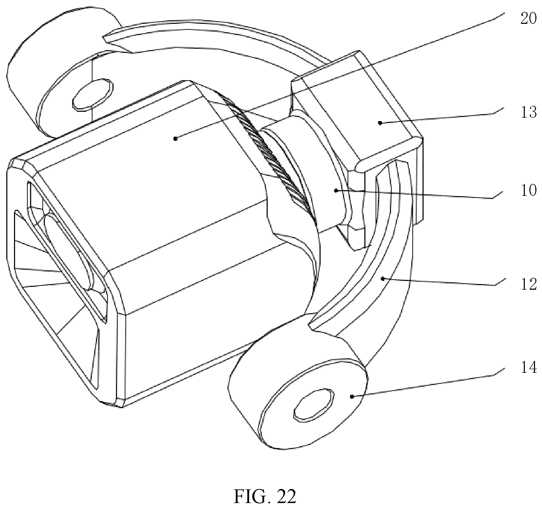

In another embodiment, as shown in FIG. 21 and FIG. 22 which are schematic structural diagrams of another gimbal, the first rotation axis may be a roll axis, the second rotation axis may be a yaw axis, and the third rotation axis may be a pitch axis, and the series axis sequence of the three rotation axes may be pitch axis-yaw axis-roll axis. The pitch axis may be fixed on the fuselage of the unmanned aerial vehicle, and the yaw axis and the pitch axis may be free axes. Correspondingly, in the gimbal shown in FIG. 21 and FIG. 22, the first driver mechanism 10 may be a roll axis driver mechanism, the first driver mechanism 10 may be connected to the photographing device 20, the second driver mechanism 13 may be a yaw axis driver mechanism, and the third driver mechanism 14 may be a pitch axis driver mechanism.

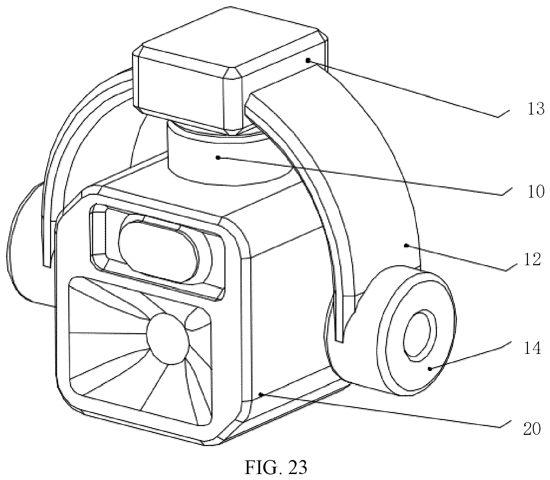

In yet another embodiment, as shown in FIG. 23 which is a schematic structural diagram of another gimbal, the first rotation axis may be a yaw axis, the second rotation axis may be a roll axis, the third rotation axis may be a pitch axis. That is, the series axis sequence of the three rotation axes may be pitch axis-roll axis-yaw axis. The pitch axis may be fixed on the fuselage of the unmanned aerial vehicle, and the roll axis and the yaw axis may be free axes. Correspondingly, in the gimbal shown in FIG. 23, the first driver mechanism 10 may be a yaw axis driver mechanism, the first driver mechanism 10 may be connected to the photographing device 20, the second driver mechanism 13 may be a roll axis driver mechanism, and the third driver mechanism 14 may be a pitch axis driver mechanism.

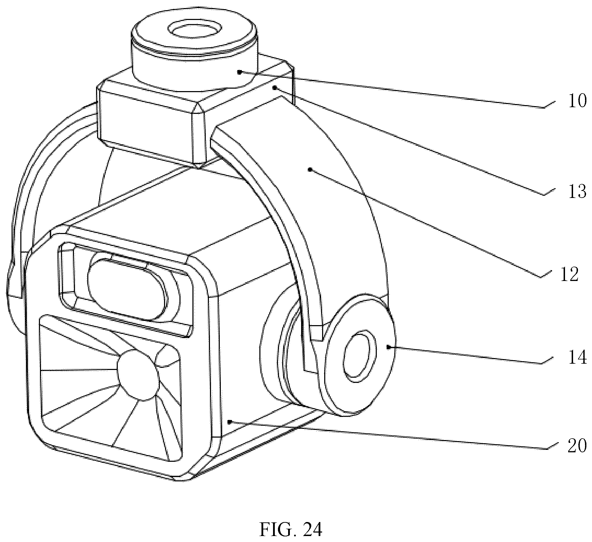

In yet another embodiment shown in FIG. 24 which is a schematic structural diagram of another gimbal, the first rotation axis may be a yaw axis, the second rotation axis may be a roll axis, and the third rotation axis may be a pitch axis. That is, the series axis sequence of the three rotation axes may be yaw axis-roll axis-pitch axis. The yaw axis may be fixed on the fuselage of the unmanned aerial vehicle, and the roll axis and the pitch axis may be free axes. Accordingly, in the gimbal shown in FIG. 24, the first driver mechanism 10 may be a yaw axis driver mechanism, the second driver mechanism 13 may be a roll axis driver mechanism, and the third driver mechanism 14 may be a pitch axis driver mechanism, and the third driver mechanism 13 may be connected to the photographing device 20.

In summary, the gimbal provided by various embodiments of the present disclosure may have following advantages.

In the gimbal provided by various embodiments of the present disclosure, the first driver mechanism and the second driver mechanism may be connected in series through the base and the arc-shaped shaft arm, to realize the linkage rotation of the gimbal around the first rotation axis and the second rotation axis. The structure may be simple, the gimbal volume may be small, the cantilever length may be short, the modal frequency and static stiffness of the gimbal may be large, which may be conducive to the precise control of the gimbal and the photographing of high-quality images. Also, since the arc-shaped shaft arm includes the first accommodation space on the side close to its axis, the accommodation space may be used to accommodate the photographing device, the optical axis of the photographing device may be non-parallel to the axis of the arc-shaped shaft arm, and the arc-shaped shaft arm may rotate around the second rotation axis under the drive of the second driver mechanism. Therefore, the arc-shaped shaft arm and the second driver mechanism may avoid the second rotation axis design, and prevent the second driver mechanism and the arc-shaped shaft arm from blocking the photographing device, which may be conducive to increasing the field of view of the photographing device and improving the flexibility and applicability of the gimbal.

The present disclosure also provides a gimbal camera shown in FIG. 1. The gimbal camera may include: a camera and a gimbal provided by any embodiments of the present disclosure. The camera may be connected to the gimbal. In the embodiments of the present disclosure, the structure of the gimbal may be the same as the gimbal described in any of the above-mentioned embodiments, and will not be described in detail here.

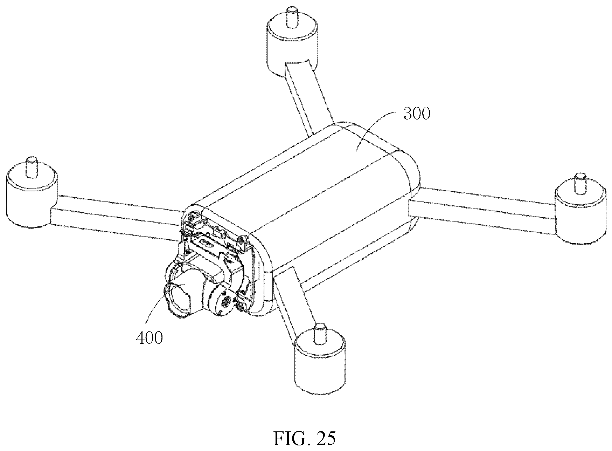

As shown in FIG. 25 which is a schematic structural diagram of an unmanned aerial vehicle, in one embodiment, the unmanned aerial vehicle may include: a body 300 and a gimbal camera 400 provided by the present disclosure. The gimbal camera 400 may be connected to the body 300. The body 300 may be the main component of the unmanned aerial vehicle, such as a fuselage, a center body, etc., and the structure of the gimbal camera 400 may be the same as the gimbal camera described in any of the above-mentioned embodiments, and will not be described in detail here.

The device embodiments described above are merely illustrative, where the units described as separate components may or may not be physically separated, and the components displayed as units may or may not be physical units. That is, they may be located in one place, or they may be distributed on multiple network units. Some or all of the modules may be selected according to actual needs to achieve the purpose of the scheme of the present disclosure. Those of ordinary skill in the art may understand and implement it without creative work.

Terms including "one embodiment," "the embodiment" or "one or more embodiments" referred to herein mean that the specific features, structures or characteristics described in conjunction with the embodiments are included in at least one embodiment of the present disclosure. In addition, please note that the examples of the words "in one embodiment" here do not necessarily all refer to the same embodiment.

In the description provided here, a large number of specific details are described. However, it can be understood that the embodiments of the present disclosure can be practiced without these specific details. In some instances, well-known methods, structures and techniques are not shown in detail to not obscure the understanding of this description.

In the claims, any reference symbol between brackets should not be constructed as a limitation to the claims. The word "comprising" does not exclude the presence of elements or steps not listed in the claims. The words "a" or "an" preceding an element does not exclude the presence of a plurality of such elements. The present disclosure may be implemented by means of hardware including a number of different elements and by means of a suitably programmed computer. In a unit claim enumerating a number of means, several of these means may be embodied by the same item of hardware. The use of the words "first," "second," or "third," etc. does not indicate any order. These words may be interpreted as names.

Various embodiments have been described to illustrate the operation principles and exemplary implementations. Although the disclosure is described with reference to the embodiments above, those skilled in the art would understand that the embodiments described above can be modified or some technical features thereof can be equivalently replaced, and these modifications and replacing do not cause the essence of the embodiments to depart from the spirit and scope of various embodiments of the present disclosure.

## Claims

1. A gimbal used to connect a photographing device comprising:
a first driver mechanism, used for driving the photographing device to rotate around a first rotation axis;
a base, wherein the base is connected to the first driver mechanism;
a second driver mechanism, connected to the base; and
an arc-shaped shaft arm, wherein: the arc-shaped shaft arm has a first accommodation space on one side close to its axis, the first accommodation space is used to accommodate the photographing device, an optical axis of the photographing device is non-parallel to the axis of the arc-shaped shaft arm, the second driver mechanism is connected to the arc-shaped shaft arm, and the second driver mechanism drives the photographing device to slide relatively along the arc-shaped shaft arm and rotate relative to the second rotation axis.

2. A gimbal used to connect a photographing device comprising:
a first driver mechanism, used for driving the photographing device to rotate around a first rotation axis;
a base, wherein the base is connected to the first driver mechanism;
a second driver mechanism, connected to the base;
an arc-shaped shaft arm, wherein: the arc-shaped shaft arm has a first accommodation space on one side close to its axis, the first accommodation space is used to accommodate the photographing device, an optical axis of the photographing device is non-parallel to the axis of the arc-shaped shaft arm, the second driver mechanism is connected to the arc-shaped shaft arm, and the second driver mechanism drives the photographing device to slide relatively along the arc-shaped shaft arm and rotate relative to the second rotation axis; and
a third driver mechanism connected to the arc-shaped shaft arm, wherein the third driver mechanism is arranged near the first accommodation space, and the third driver mechanism is used to drive the photographing device to rotate around a third rotation axis in the first accommodation space.

3. The gimbal according to claim 1 or 2, wherein:
the angle between the optical axis of the photographing device and the axis of the arc-shaped shaft arm is adjustable.

4. The gimbal according to claim 3, wherein:
the angle between the optical axis of the photographing device and the axis of the arc-shaped shaft arm is between 0 degrees and 180 degrees.

5. The gimbal according to claim 3, wherein:
the photographing device is connected to the first driver mechanism, and the first driver mechanism drives the photographing device to rotate around the first rotation axis to adjust the angle between the optical axis of the photographing device and the axis of the arc-shaped shaft arm.

6. The gimbal according to claim 2, wherein:
the photographing device is connected to the third driver mechanism, and the third driver mechanism drives the photographing device to rotate around the third rotation axis, such that the angle between the optical axis of the photographing device and the axis of the arc-shaped shaft arm is adjusted.

7. The gimbal according to claim 1 or 2, wherein:
the optical axis of the photographing device extends in a direction perpendicular to the axis of the arc-shaped shaft arm.

8. The gimbal according to claim 7, wherein:
the photographing device is connected to the first driver mechanism, and during the process of the photographing device sliding along the arc-shaped shaft arm, the photographing device remains facing one side of the axis of the arc-shaped shaft arm.

9. The gimbal according to claim 1 or 2, wherein:
the second rotation axis substantially coincides with the axis of the arc-shaped shaft arm.

10. The gimbal according to claim 1 or 2, wherein:
the intersection of the first rotation axis and the second rotation axis is located in the first accommodation space.

11. The gimbal according to claim 2, wherein:
the intersection of the first rotation axis, the second rotation axis, and the third rotation axis is located in the first accommodation space.

12. The gimbal according to claim 1 or 2, wherein:
the first rotation axis is one of a roll axis, a pitch axis, and a yaw axis, and the second rotation axis is another one of the roll axis, the pitch axis, and the yaw axis.

13. The gimbal according to claim 1 or 2, wherein:
the first rotation axis is one of a roll axis, a pitch axis, and a yaw axis, the second rotation axis is another one of the roll axis, the pitch axis, and the yaw axis, and the third rotation axis is yet another one of the roll axis, the pitch axis, and the yaw axis.

14. The gimbal according to claim 1, wherein the first rotation axis and the second rotation axis are substantially perpendicular.

15. The gimbal according to claim 2, wherein:
the first rotation axis, the second rotation axis, and the third rotation axis are substantially orthogonal to each other.

16. The gimbal according to claim 1 or 2, wherein:
the arc-shaped shaft arm is one of a circular arc or an elliptical arc.

17. The gimbal according to claim 1 or 2, wherein:
the second driver mechanism includes an electromagnetic driver mechanism.

18. The gimbal according to claim 17, wherein:
the electromagnetic driver mechanism includes a coil assembly and a magnetic assembly, wherein: one of the coil assembly and the magnetic assembly is connected to the base, the other of the coil assembly and the magnetic assembly is connected to the arc-shaped shaft arm, the coil assembly and the magnetic assembly are arranged facing and spaced apart from each other, and the coil assembly drives the arc-shaped shaft arm to slide relative to the base when powered on.

19. The gimbal according to claim 18, wherein:
the coil assembly includes an iron core and a coil wound around the iron core, and the magnetic assembly includes a first retaining frame and a magnetic member connected to the first retaining frame.

20. The gimbal according to claim 19, wherein:
the electromagnetic driver mechanism further includes a positioning pin and a positioning sleeve, wherein: the iron core is sleeved outside the positioning pin, and the positioning sleeve is sleeved outside the iron core.

21. The gimbal according to claim 18, wherein:
the electromagnetic driver mechanism further includes a yoke, and the magnetic assembly is bonded to the yoke.

22. The gimbal according to claim 1 or 2, wherein:
the second driver mechanism includes a motor and a transmission member connected to the motor, wherein: the motor is fixed on the base, the transmission member is connected to the arc-shaped shaft arm, and the motor drives the transmission member to drive the arc-shaped shaft arm to rotate.

23. The gimbal according to claim 22, wherein:
the transmission member includes a first transmission rope and a second transmission rope;
one end of the first transmission rope is connected to the motor, and the other end of the first transmission rope is connected to the arc-shaped shaft arm, wherein: under the drive of the motor, the first transmission rope drives the arc-shaped shaft arm to rotate along the first direction; and
one end of the second transmission rope is connected to the motor, and the other end of the second transmission rope is connected to the arc-shaped shaft arm, wherein: under the drive of the motor, the second transmission rope drives the arc-shaped shaft arm to rotate along the second direction, and the second direction is opposite to the first direction.

24. The gimbal according to claim 23, wherein:
the first transmission rope is at least partially wrapped around the outside of the motor along the second direction, and the second transmission rope is at least partially wrapped around the outside of the motor along the first direction; and
along the axial direction of the motor, the orthographic projections of the first transmission rope and the second transmission rope are staggered on the motor and the arc-shaped shaft arm.

25. The gimbal according to claim 23, wherein:
along the axial direction of the motor, there is a gap between the first transmission rope and the second transmission rope.

26. The gimbal according to claim 23, wherein:
the first transmission rope or the second transmission rope includes at least one of a steel wire, a steel belt or a nylon rope.

27. The gimbal according to claim 22, wherein:
the radius of the arc-shaped shaft arm is larger than the radius of the motor; or
the radius of the arc-shaped shaft arm is smaller than the radius of the motor.

28. The gimbal according to claim 1 or 2, wherein:
the arc-shaped shaft arm penetrates through the base, and the second driver mechanism drives the arc-shaped shaft arm or the base to rotate around the second rotation axis.

29. The gimbal according to claim 28, wherein:
the gimbal further includes a rolling assembly connected between the arc-shaped shaft arm and the base, such that the arc-shaped shaft arm is able to slide relative to the base.

30. The gimbal according to claim 29, wherein:
the rolling assembly includes a middle shaft and a roller that is able to rotate around the middle shaft, wherein the middle shaft is fixed on the base, and the roller is connected to the arc-shaped shaft arm.

31. The gimbal according to claim 30, wherein:
the rollers include a first roller and a second roller which are arranged along the axial direction of the middle shaft, wherein: the first roller is connected to the second roller, and both the first roller and the second roller are sleeved outside the middle shaft and are able to rotate around the middle shaft.

32. The gimbal according to claim 31, wherein:
the second roller at least partially extends into the first roller along the axial direction of the middle shaft and is interference-fitted with the first roller.

33. The gimbal according to claim 31, wherein:
the rolling assembly further includes: a first bearing and a second bearing; wherein:
the first bearing is located at one end of the first roller away from the second roller;
the outer ring of the first bearing is connected to the first roller, and the inner ring of the first bearing is connected to the middle shaft; and
the second bearing is located at one end of the second roller away from the first roller, the outer ring of the second bearing is connected to the second roller, and the inner ring of the second bearing is connected to the middle shaft.

34. The gimbal according to claim 33, wherein:
the rolling assembly further includes: a first gasket which is connected between the second bearing and the base, wherein:
the outer diameter of the first gasket is larger than the inner ring of the second bearing and smaller than the outer ring of the second bearing to form a gap between the outer ring of the second bearing and the base.

35. The gimbal according to claim 33, wherein:
the rolling assembly also includes a pre-tightening nut which is located on a side of the first bearing away from the second bearing and is sleeved outside the middle shaft to clamp the first bearing, the first roller, the second roller, and the second bearing on the base.

36. The gimbal according to claim 31, wherein:
the first roller is provided with a first inclined surface protruding toward the arc-shaped shaft arm, and the arc-shaped shaft arm is provided with a second inclined surface corresponding to the first inclined surface, and the first inclined surface abuts against the second inclined surface; and
the second roller is provided with a third inclined surface protruding toward the arc-shaped shaft arm, and the arc-shaped shaft arm is provided with a fourth inclined surface corresponding to the third inclined surface, and the third inclined surface abuts against the fourth inclined surface.

37. The gimbal according to claim 29, wherein:
the rolling assembly includes a second retaining frame and rolling balls, wherein:
the second retaining frame is arranged between the outer side of the arc-shaped shaft arm and the base, and the rolling balls are embedded in the second retaining frame and are connected to the arc-shaped shaft arm and the base in a rolling manner.

38. The gimbal according to claim 37, wherein:
the rolling balls include first rolling balls and second rolling balls, wherein: the first rolling balls are embedded in the upper vertex corner of the second retaining frame, and the second rolling balls are embedded in the lower vertex corner of the first retaining frame.

39. The gimbal according to claim 37, wherein:
the second retaining frame is provided with a plurality of ball mounting holes arranged at intervals, and one rolling ball is embedded in one of the plurality of ball mounting holes.

40. The gimbal according to claim 37, wherein:
the base is provided with a wedge-shaped roll groove at a position corresponding to the rolling balls, and the arc-shaped shaft arm is provided with a step-shaped roll groove at a position corresponding to the rolling balls, wherein the step-shaped roll groove has two groove walls connected to each other, and the rolling balls abut against the groove walls of the wedge-shaped roll groove and the step-shaped roll groove.

41. The gimbal according to claim 28, wherein:
the gimbal further includes a pre-tightening assembly which is connected to the arc-shaped shaft arm and the base to provide a pre-tightening force to the arc-shaped shaft arm relative to the base.

42. The gimbal according to claim 41, wherein:
the base is provided with a receiving member, and the pre-tightening assembly passes through the receiving member;
after the pre-tightening assembly moves to a target position in the receiving member, the pre-tightening assembly is fixed in the receiving member to provide a pre-tightening force and compensate for processing and component errors.

43. The gimbal according to claim 42, wherein:
the length extension direction of the receiving member is the radial direction of the arc-shaped shaft arm.

44. The gimbal according to claim 42, wherein:
one pre-tightening assembly includes a pre-tightening pin, and a third bearing and a fourth bearing sleeved outside the pre-tightening pin, wherein: the outer rings of the third bearing and the fourth bearing are connected to the arc-shaped shaft arm, and the inner rings of the third bearing and the fourth bearing are connected to the pre-tightening pin; and the pre-tightening pin passes through the receiving member and fixed in the receiving member.

45. The gimbal according to claim 44, wherein:
the pre-tightening pin is bonded in the receiving member.

46. The gimbal according to claim 44, wherein:
two ends of the pre-tightening pin are at least partially exposed outside the receiving member.

47. The gimbal according to claim 44, wherein:
the pre-tightening assembly also includes a pre-tightening limit sleeve which is sleeved outside the pre-tightening pin and abuts between the third bearing and the fourth bearing.

48. The gimbal according to claim 44, wherein:
the pre-tightening assembly also includes: a second gasket and a third gasket; wherein:
the second gasket is connected between the third bearing and the base, and the outer diameter of the second gasket is larger than the inner ring of the third bearing and smaller than the outer ring of the third bearing, to form a gap between the outer ring of the third bearing and the base; and
the third gasket is connected between the fourth bearing and the base, and the outer diameter of the third gasket is larger than the inner ring of the fourth bearing and smaller than the outer ring of the fourth bearing, to form a gap between the outer ring of the fourth bearing and the base.

49. The gimbal according to claim 41, wherein:
the gimbal includes two pre-tightening assemblies.

50. The gimbal according to claim 49, wherein:
the two pre-tightening assemblies are parallel or non-parallel.

51. The gimbal according to claim 41, wherein:
the base is provided with a receiving member, and the pre-tightening assembly passes through the receiving member and move in the receiving member to adjust the pre-tightening force.

52. The gimbal according to claim 51, wherein:
one pre-tightening assembly includes a bearing bracket, a cover plate, a pre-tightening member, and a push member, wherein:
the bearing bracket and the cover plate are snap-fitted and connected, and a second accommodation space for accommodating the pre-tightening member and the push member is formed therebetween, and the bearing bracket is close to the arc-shaped shaft arm and is rollingly connected to the arc-shaped shaft arm;
the pre-tightening member and the push member are both arranged in the second accommodation space, the pre-tightening member is connected to the push member, and the pre-tightening member is able to drive the push member to move toward the arc-shaped shaft arm to provide a pre-tightening force to the arc-shaped shaft arm.

53. The gimbal according to claim 52, wherein:
the pre-tightening assembly further includes a rolling mechanism, and the rolling mechanism is arranged on a side of the bearing bracket close to the arc-shaped shaft arm to connect the bearing bracket to the arc-shaped shaft arm in a rolling manner.

54. The gimbal according to claim 53, wherein:
the rolling mechanism includes a first pin shaft, a second pin shaft, a fifth bearing, and a sixth bearing, wherein:
the first pin shaft is connected to the bearing bracket, the inner ring of the fifth bearing is connected to the first pin shaft, and the outer ring of the fifth bearing is connected to the arc-shaped shaft arm; and
the second pin shaft is connected to the bearing bracket, the inner ring of the sixth bearing is connected to the second pin shaft, and the outer ring of the sixth bearing is connected to the arc-shaped shaft arm.

55. The gimbal according to claim 52, wherein:
the pre-tightening member is a pre-tightening screw, and the push member includes a first push member and a second push member;
the first push member and the second push member are matched with the bearing bracket on one side close to the bearing bracket through an inclined surface;
the pre-tightening screw is threadedly engaged with the first push member and the second push member, and the rotation of the pre-tightening screw is able to drive the first push member and the second push member to move along the axial direction of the pre-tightening screw, and the movement of the first push member and the second push member along the axial direction of the pre-tightening screw is able to push the bearing bracket toward or away from the arc-shaped shaft arm.

56. The gimbal according to claim 55, wherein:
the pre-tightening assembly also includes a guide sleeve and an elastic member, wherein:
one end of the guide sleeve is connected to the second push member, and the other end of the guide sleeve is provided with an accommodation groove; and
the elastic member is connected to the bottom of the accommodation groove, and the pre-tightening screw is inserted into the accommodation groove and abuts against the elastic member.

57. The gimbal according to claim 55, wherein:
the pre-tightening assembly also includes a first arc slider and a first arc slider; wherein:
the first arc slider is connected to the cover plate and cooperates with the first push member in arc, and the second arc slider is connected to the cover plate and cooperates with the second push member in arc.

58. The gimbal according to claim 57, wherein:
the first arc slider is provided with a first friction plate extending toward the second arc slider, and the first friction plate at least partially extends between the second arc slider and the cover plate; and
the second arc slider is provided with a second friction plate extending toward the first arc slider, and the second friction plate at least partially extends between the first arc slider and the cover plate.

59. The gimbal according to claim 51, wherein:
the pre-tightening assembly includes a first coil assembly and a first magnetic assembly, wherein:
the first coil assembly is fixed to the base, the first magnetic assembly is fixed to the arc-shaped shaft arm, the first magnetic assembly and the first coil assembly are arranged facing and spaced apart from each other, and the first coil assembly is able to drive the arc-shaped shaft arm to rotate relatively when powered on to provide a pre-tightening force.

60. The gimbal according to claim 59, wherein:
the pre-tightening assembly also includes a bearing pin and a carrier bearing, wherein:
the first coil assembly is fixed to the base through the bearing pin; the carrier bearing is sleeved outside the bearing pin, and the outer ring of the carrier bearing is connected to the arc-shaped shaft arm to support the arc-shaped shaft arm to rotate relative to the bearing pin.

61. The gimbal according to claim 59, wherein:
the pre-tightening assembly also includes: a fixed pin, a fixed bearing, a floating pin, a floating bearing, and a second elastic member; wherein:
the fixed pin is connected to the base, and the fixed bearing is sleeved outside the fixed pin;
the second elastic member is connected to the base; the floating pin is connected to the second elastic member, and the floating bearing is sleeved outside the floating pin; under the elastic action of the second elastic member, the floating pin is able to drive the floating bearing to slide in the receiving member, and is pressed against the arc-shaped shaft arm by the second elastic member.

62. The gimbal according to claim 61, wherein:
the pre-tightening assembly further includes a fixation pressing plate which is connected to the fixed pin and the base to fix the fixed pin to the base.

63. The gimbal according to claim 59, wherein:
the pre-tightening assembly further includes a first yoke, wherein the first yoke is bonded to the inner side of the arc-shaped shaft arm.

64. The gimbal according to claim 29, wherein:
the gimbal further includes a pre-tightening assembly which is connected to the arc-shaped shaft arm and the base to provide a pre-tightening force to the arc-shaped shaft arm relative to the base.

65. The gimbal according to claim 64, wherein:
the base is provided with an avoidance space, the arc-shaped shaft arm is arranged in the avoidance space and is able to rotate around the second rotation axis in the avoidance space, and the rolling assembly and the pre-tightening assembly are at least partially located in the avoidance space.

66. The gimbal according to claim 64, wherein:
the arc-shaped shaft arm includes a first side close to its axis and a second side away from its axis, the rolling assembly is connected between the base and the first side, and the pre-tightening assembly is connected between the base and the second side.

67. The gimbal according to claim 1 or 2, wherein:
the gimbal also includes a position detection assembly, which is connected to the arc-shaped shaft arm to detect the rotational position of the arc-shaped shaft arm relative to the base.

68. The gimbal according to claim 67, wherein:
the position detection assembly includes a Hall assembly, and the Hall assembly includes a magnetic assembly and a Hall sensor, wherein the magnetic assembly is arranged on the arc-shaped shaft arm and the Hall sensor is connected to the base.

69. The gimbal according to claim 68, wherein:
the magnetic assembly includes a plurality of auxiliary magnets which are sequentially spaced and distributed along the circumference of the arc-shaped shaft arm.

70. The gimbal according to claim 69, wherein:
the Hall assembly further includes a magnet cover, wherein the magnet cover covers the outside of the plurality of auxiliary magnets.

71. The gimbal according to claim 67, wherein:
the position detection assembly includes at least one of a grating, a capacitive grating, or a magnetic grating.

72. The gimbal according to claim 67, wherein:
the position detection assembly also includes an original position detection assembly.

73. The gimbal according to claim 1 or 2, wherein:
the gimbal also includes a connector, and the first driver mechanism is connected to the connector.

74. The gimbal according to claim 73, wherein:
the gimbal also includes a shock-absorption assembly which is located between the connector and the first driver mechanism.

75. The gimbal according to claim 74, wherein:
the shock-absorption assembly includes a shock-absorption bracket and a shock-absorption ball, wherein the first driver mechanism is connected to the shock-absorption bracket and the shock-absorption bracket is connected to the connector via the shock-absorption ball.

76. The gimbal according to claim 74, wherein:
the first driver mechanism includes a first motor, wherein: the first motor includes a first rotor part and a first stator part, the first stator part is connected to the shock-absorption bracket, and the first rotor part is connected to the base.

77. The gimbal according to claim 2, wherein:
two ends of the arc-shaped shaft arm are also provided with extension arms, and the third driver mechanism is installed on the extension arms to facilitate installation and positioning.

78. The gimbal according to claim 77, wherein:
one extension arm is a planar structure.

79. The gimbal according to claim 77, wherein:
the extension arms are connected to the arc-shaped shaft arm through fasteners, and the third driver mechanism is connected to the extension arms through fasteners.

80. The gimbal according to claim 1 or 2, wherein:
the gimbal also includes a control line, wherein: one end of the control line is electrically connected to a control board; the other end of the control line sequentially passes through the first driver mechanism, the base, and the arc-shaped shaft arm, and is electrically connected to the photographing device; and the control line is extended and retracted as the arc-shaped shaft arm rotates.

81. The gimbal according to claim 80, wherein:
the arc-shaped shaft arm is provided with a through hole for the control line to pass through, a wire wing is sleeved inside the through hole, and the control line passes through the wire ring to reduce the friction between the control line and the arc-shaped shaft arm.

82. The gimbal according to claim 81, wherein:
the wire ring is made of a material including at least one of polyoxymethylene, polytetrafluoroethylene, or polyetheretherketone.

83. The gimbal according to claim 1 or 2, wherein:
the gimbal also includes a seal structure which is used to seal the arc-shaped shaft arm.

84. The gimbal according to claim 83, wherein:
the seal structure includes at least one of a labyrinth seal, a felt seal, a seal ring seal, or a pressure differential seal.

85. The gimbal according to claim 1 or 2, wherein:
the second rotation axis substantially coincides with the axis of the arc-shaped shaft arm.

86. A gimbal camera, comprising:
a camera and a gimbal according to claims 1 to 85, wherein the camera is connected to the gimbal.

87. An unmanned aerial vehicle, comprising:
a body and a gimbal camera according to claim 86, wherein the gimbal camera is connected to the body.
